# EUROPEAN PATENT APPLICATION

(11) **EP 3 971 114 A1**
(43) Date of publication of application: **23.03.2022**
(21) Application number: 21796868.4
(22) Date of filing: 26.04.2021
(51) Int. Cl.: B65G 1/137, G06Q 10/08

(54) **WAREHOUSE OPERATION SYSTEM AND METHOD**

(30) Priority: 26.04.2020 CN 202010337602; 22.04.2021 CN 202110434078
(71) Applicant: Hangzhou Yiwu Technologies Co., Ltd., Hangzhou, Zhejiang 311121 (CN)
(72) Inventor: TIE, Yan, Hangzhou, Zhejiang 311121 (CN)
(74) Representative: Raynor, Simon Mark
(86) International application number: PCT/CN2021/090023
(87) International publication number: WO 2021/218931

(57) **Abstract**

Embodiments of the present disclosure relate to the field of warehousing devices, which provide a method and system for warehousing operation. The system for warehousing operation includes: a prompting device, configured to receive real-time order information and prompt a worker or a picking device to pick an item according to the order information; a plurality of order carrying trolleys, configured to allocate the item picked by the worker or the picking device to an order box corresponding to the item, or carry the order box to transport the item picked by the worker or the picking device; and a receiving device, configured to receive correspondence information between each of the plurality of order carrying trolleys and the item on each of the plurality of order carrying trolleys. Each of the plurality of order carrying trolleys is provided with a communication device configured to receive an allocating strategy obtained according to the correspondence information. The method and system for warehousing operation provided in the present disclosure improves efficiency of picking items.

## Description

### CROSS REFERENCE TO RELATED APPLICATIONS

The present disclosure claims the priorities of Chinese patent application No. 202010337602.1 filed on April 26, 2020, titled "SYSTEM AND METHOD FOR WAREHOUSING OPERATION," and Chinese patent application No. 202110434078.4 filed on April 22, 2021, titled "SYSTEM AND METHOD FOR WAREHOUSING OPERATION," each of which is incorporated by reference in its entirety.

### TECHNICAL FIELD

Embodiments of the present disclosure relate to the field of warehousing devices, and in particular a system and method for warehousing operation.

### BACKGROUND

In a conventional warehousing operation system, a mobile robot is used to lift and transport movable shelves to corresponding picking stations. Because there may be a plurality of shelves on one side of a movable shelf and different items may be stored in the plurality of shelves, the mobile robot needs to transport the movable shelf to a picking station first in the picking process of a plurality of orders, and then the system prompts a picking personnel to pick corresponding items from the movable shelf, and next, the mobile robot transports the movable shelf to a next picking station and the system prompts the picking personnel to pick a next order. This mode is repeated until the picking of all the orders is completed.

The applicant finds that there are at least the following problems in existing technologies. When hot items appear, they may be required by many orders. At this time, shelves in which the hot items are stored may be required by a plurality of picking stations, and the shelves need to visit each of the plurality of picking stations sequentially, thus causing different picking stations to wait for each other and resulting in a low efficiency of picking the items.

### SUMMARY

Embodiments of the present disclosure are intended to provide a system and method for warehousing operation, which improve efficiency of picking items and completing orders.

In order to solve the above technical problems, an embodiment of the present disclosure provides a system for warehousing operation including: a prompting device, configured to receive real-time order information and prompt a worker or a picking device to pick an item according to the order information; a plurality of order carrying trolleys, configured to allocate the item picked by the worker or the picking device to an order box corresponding to the item, or carry the order box to transport the item picked by the worker or the picking device; and a receiving device, configured to receive correspondence information between each of the plurality of order carrying trolleys and the item on each of the plurality of order carrying trolleys; wherein each of the plurality of order carrying trolleys is provided with a communication device configured to receive an allocating strategy obtained according to the correspondence information.

An embodiment of the present disclosure further provides a method for warehousing operation, including: receiving, by a prompting device, real-time order information and prompting, by the prompting device, a worker or a picking device to pick an item according to the order information; receiving, by a receiving device, correspondence information between each of a plurality of order carrying trolleys and the item on each of the plurality of order carrying trolleys; receiving, by a communication device provided on each of the plurality of order carrying trolleys, an allocating strategy sent by the receiving device and obtained according to the correspondence information; and allocating, by each of the plurality of order carrying trolleys, the item picked by the worker or the picking device to an order box corresponding to the item, or carrying, by each of the plurality of order carrying trolleys, the order box to transport the item picked by the worker or the picking device.

An embodiment of the present disclosure further provides a system for warehousing operation, including: a prompting device, configured to receive real-time order information and prompt a worker or a picking device to pick an item according to the order information; an allocating device, configured to carry an order box to store and/or carry the item picked by the worker or the picking device; and a receiving device, configured to receive correspondence information between the allocating device and the item on the allocating device, wherein the allocating device is provided with a communication device configured to receive and prompt an allocating strategy obtained according to the correspondence information; wherein the allocating device includes any one or a combination of an order allocation wall fixedly disposed, a movable allocation wall and a conveyance line capable of carrying the order box.

An embodiment of the present disclosure further provides a method for warehousing operation, including: receiving, by a prompting device, real-time order information, and prompt, by the prompting device, a worker or a picking device to pick an item according to the order information; receiving, by a receiving device, correspondence information between the order box on the allocating device and the item; and receiving and saving, by a communication device disposed on the allocating device, an allocating strategy sent by the receiving device and obtained according to the correspondence information; wherein the allocating device includes any one or a combination of an order allocation wall fixedly disposed, a movable allocation wall and a conveyance line capable of carrying the order box.

Compared with the existing technology, the embodiments of the present disclosure provide a prompting device, configured to receive real-time order information and prompt a worker or a picking device to pick an item according to the order information; a plurality of order carrying trolleys, configured to allocate the item picked by the worker or the picking device to an order box corresponding to the item, or carry the order box to transport the item picked by the worker or the picking device; and a receiving device, configured to receive correspondence information between each of the plurality of order carrying trolleys and the item on each of the plurality of order carrying trolleys. Each of the plurality of order carrying trolleys is provided with a communication device configured to receive an allocating strategy obtained according to the correspondence information. That is, after picking the item, the worker or the picking device puts the picked item in the order carrying trolley to enable the order carrying trolley to perform order allocation, so that the order allocation may not be limited by the number of orders able to be stored in an order shelf in the picking station. Therefore, each worker or picking device is able to process a large number of dynamic orders at the same time, so that orders containing the hot item may be distributed to a single picking station as centrally as possible, and the worker or picking device of the picking station may handle the picking of the hot item through a continuous picking operation, thereby avoiding a problem of waiting between different picking stations caused by the orders containing the hot item from being dispersed in multiple picking stations for picking while the shelf where the hot item is located needs to visit each picking station according to a certain order, thus improving the efficiency of picking the items.

In addition, the system for warehousing operation further includes: a shelf, configured to store a box containing the item; and a forklift, configured to take the box in which the item required for an order is stored from the shelf to enable the worker or the picking device to pick the item in the box. A forklift is provided to take a box in which an item required for an order is located from the shelf, so that the worker or the picking device picks the item in the box, and the order carrying trolley is used to allocate the item picked by the worker or the picking device to the order box corresponding to the item, or the order box is carried to transport the item picked by the worker or the picking device. That is, different operations are disassembled and completed with different trolleys, so that the function needs to be realized by each trolley is simpler, thus resulting in a simpler structure, a lower equipment cost, and an improved system robustness. Meanwhile, compared with the existing technology in which a single trolley is used to simultaneously implement taking of the box from the shelf and order allocation, the order carrying trolley in this embodiment does not need to take the box from the shelf, so that the center of gravity is lower, thus a traveling speed of the order carrying trolley may be adjusted faster and the carrying efficiency is higher, so that not too many order carrying trolleys are required, thereby reducing the number of required trolleys and the cost.

In addition, the shelf includes a box storage device and a box temporary placing device located below the box storage device, and the forklift is configured to take the box in which the item required for the order is stored from the box storage device and place the box on the box temporary placing device.

In addition, the system for warehousing operation further includes a box carrying trolley, configured to carry the box in which the item required for the order is stored on the box temporary placing device.

In addition, the system for warehousing operation further includes a box storage device, configured to temporarily store the box, wherein the box carrying trolley is configured to carry the box from the box temporary placing device to the box storage device or to a position adjacent to the prompting device according to a picking priority of the item in the box.

In addition, the forklift includes a movable chassis, a lift device disposed on the movable chassis, and a fork structure disposed on the lift device; and wherein the fork includes a chute retractable in a direction perpendicular to a lift direction of the lift device, and a stopper disposed on the chute.

In addition, before the prompting device receives the real-time order information and prompts the worker or the picking device to pick the item according to the order information, the method further includes taking, by a forklift, a box in which the item required for an order is stored from a shelf to enable the worker or the picking device to pick the item in the box.

In addition, the taking, by the forklift, the box in which the item required for the order is stored from the shelf to enable the worker or the picking device to pick the item in the box includes: taking, by the forklift, the box in which the item required for the order is stored from a box storage device at an upper layer of the shelf and place the box on a box temporary placing device at a bottom layer of the shelf; after the forklift takes the box in which the item required for the order is stored from the shelf to enable the worker or the picking device to pick the item in the box, the method further includes: carrying, by a box carrying trolley, the box in which the item required for the order is stored on the box temporary placing device. The forklift is used to take the box in which the item required by the order is stored from the box storage device at the upper layer of the shelf and place the box on the box temporary placing device at the bottom layer of the shelf, and the box carrying trolley is used to take the box in which the item required by the order is stored on the box temporary placing device. That is, an operation of the box to the picking station is further disassembled, and is separately performed using the forklift and the box carrying trolley, so that the function needs to be realized by each trolley is simpler, thus resulting in a simpler structure, a lower equipment cost, and an improved system robustness. Meanwhile, compared with the existing technology in which a single trolley is used to implement the taking of the box and the carrying of the box to the picking station, the box carrying trolley in this embodiment does not need to take the box from the shelf, so that the center of gravity is lower, thus a traveling speed of the box carrying trolley may be adjusted faster and the carrying efficiency is higher, so that not too many box carrying trolleys are required, thereby reducing the number of required trolleys and the cost.

In addition, before each of the plurality of order carrying trolleys allocates the item picked by the worker or the picking device to the order box corresponding to the item, or carries the order box to transport the item picked by the worker or the picking device, the method further includes: acquiring, by each of the plurality of order carrying trolleys, an empty order box from an order box injection port; banding the order with the empty order box according to the order information; determining whether the item required by the order that is bound exists in a picking station where the prompting device is located; in response to the item required by the order that is bound existing in the picking station where the prompting device is located, driving each of the plurality of order carrying trolleys to move to the picking station; and in response to the item required by the order that is bound not existing in the picking station where the prompting device is located, placing, by each of the plurality of order carrying trolleys, the empty order box that is bound on an order temporary storage shelf, and taking, by each of the plurality of order carrying trolleys, another order box from the order box injection port.

In addition, the system for warehousing operation further includes a shelf carrying trolley, wherein the shelf carrying trolley includes a movement mechanism, and a lifting mechanism disposed on the movement mechanism; wherein the lifting mechanism is configured to lift a bottom of the movable allocation wall to carry the movable allocation wall. In this way, it is convenient and fast to carry boxes of multiple orders to a next procedure at the same time, which further improves the efficiency of order allocation.

In addition, the system for warehousing operation further includes a forklift, configured to take an order box to be carried from the allocating device and carry the order box to be transport.

In addition, the system for warehousing operation further includes a conveyance line, configured to convey an order box having been taken from the allocating device and having been picked by a picking station.

In addition, the communication device includes a display screen, any one or a combination of a plurality of lighting devices provided in one-to-one correspondence information with a plurality of order boxes. This setting can better prompt statuses (including types, models, quantities, etc.) of items in each order box.

In addition, each prompting device preferentially receives order information of orders containing the same item. In this way, the number of picking stations to be reached by the trolley carrying each kind of item is relatively small, and the picking efficiency is improved.

In addition, before allocating the item picked by the worker or the picking device to corresponding order box on the allocating device, the method further includes: binding an order with the order box according to the order information; and binding the order box with a specified position of a specified allocating device according to the order information.

In addition, before binding the order box with the specified position of the specified allocating device according to the order information, the method further includes: assigning a shelf carrying trolley or the worker to carry an allocating device containing an empty order box to a workstation according to work scheduling information of the workstation; or assigning a forklift to take an empty order box from a temporary storage device for storing empty order boxes and an empty order box injection port, and to place the empty order box at an order box placement position of an order box allocating device of the workstation; or dispatching the conveyance line to convey the order box to the workstation.

In addition, the method further includes: in response to a picking work of the order on the order box allocating device being completed at the workstation, dispatching a shelf carrying trolley to carry the movable allocation wall to other workstations or temporary storage areas; or prompting the worker to carry the movable allocation wall to other workstations and temporary storage areas; or dispatching a forklift to take an order box to be carried from the allocating device and carrying the order box to be carried through the forklift; or dispatching the forklift to take the order box to be carried from the allocating device and carrying the order box through the conveyance line.

### BRIEF DESCRIPTION OF THE DRAWINGS

One or more embodiments are described as examples with reference to the corresponding figures in the accompanying drawings, and the examples do not constitute a limitation to the embodiments. Elements with the same reference numerals in the accompanying drawings represent similar elements. The figures in the accompanying drawings do not constitute a proportion limitation unless otherwise stated.
FIG. 1 is a schematic structural diagram of a system for warehousing operation according to an embodiment of the present disclosure;
FIG. 2 is a schematic structural diagram of a shelf according to an embodiment of the present disclosure;
FIG. 3 is a schematic structural diagram of a forklift according to an embodiment of the present disclosure;
FIG. 4 is a schematic structural diagram of an order carrying trolley according to an embodiment of the present disclosure;
FIG. 5 is a layout diagram of an interior of a warehouse according to an embodiment of the present disclosure;
FIG. 6 is a schematic diagram of an interior of a fixed shelf area according to an embodiment of the present disclosure;
FIG. 7 is a schematic diagram of an interior of a box temporary placing area in the embodiment of the present disclosure;
FIG. 8 is a schematic diagram of an interior of a picking and allocating area in the embodiment of the present disclosure;
FIG. 9 is a schematic diagram of a quality inspection-packaging-outbound area according to an embodiment of the present disclosure;
FIG. 10 is a flowchart of a method for warehousing operation according to an embodiment of the present disclosure;
FIG. 11 is a flowchart of order picking according to an embodiment of the present disclosure;
FIG. 12 is a schematic diagram of a forklift taking a box from a shelf;
FIG. 13 is a schematic diagram of a forklift placing a box on a box temporary placing device according to an embodiment of the present disclosure;
FIG. 14 is a schematic diagram of an order carrying trolley taking a box from a box storage device according to an embodiment of the present disclosure;
FIG. 15 is a schematic diagram of an order carrying trolley taking a box from and placing the box in a fixed shelf area in an embodiment of the present disclosure;
FIG. 16 is a schematic diagram of a worker allocating an item to an item allocating device on an order carrying trolley according to an embodiment of the present disclosure;
FIG. 17 is a schematic diagram of a worker allocating an item to an order box carried by an order carrying trolley according to an embodiment of the present disclosure;
FIG. 18 is a schematic diagram of a worker directly picking out an item from a box carried by an order carrying trolley and allocating the item according to an embodiment of the present disclosure;
FIG. 19 is a schematic diagram of an order carrying trolley allocating an item to an order box on a box storage device according to an embodiment of the present disclosure;
FIG. 20 is a schematic diagram of an order carrying trolley allocating an item to an order box on another order carrying trolley according to an embodiment of the present disclosure;
FIG. 21 is a schematic diagram of entering a new empty order box according to an embodiment of the present disclosure;
FIG. 22 is a schematic diagram showing that an order box of which the picking is completed is pushed to a conveying device according to an embodiment of the present disclosure;
FIG. 23 is a flowchart of replenishment according to an embodiment of the present disclosure;
FIG. 24 is a schematic diagram of an operation in a replenishment area according to an embodiment of the present disclosure;
FIG. 25 is a flowchart of inventory counting according to an embodiment of the present disclosure;
FIG. 26 is a schematic diagram of an order carrying trolley carrying a box to be inventoried to an automatic weighing device according to an embodiment of the present disclosure;
FIG. 27 is a schematic diagram of an order carrying trolley carrying the box to be inventoried to the underside of a gantry of an automatic inventory station according to an embodiment of the present disclosure;
FIG. 28 is a flowchart of returning an item and placing the item on a shelf according to an embodiment of the present disclosure;
FIG. 29 is a flowchart of inventory sorting according to an embodiment of the present disclosure;
FIG. 30 is a schematic structural diagram of a system for warehousing operation according to an embodiment of the present disclosure;
FIG. 31 is a schematic structural diagram of a shelf according to an embodiment of the present disclosure;
FIG. 32 is a schematic structural diagram of a forklift according to an embodiment of the present disclosure;
FIG. 33 is a schematic structural diagram of an order carrying trolley according to an embodiment of the present disclosure;
FIG. 34 is a layout diagram of an interior of a warehouse according to the embodiment of the present disclosure;
FIG. 35 is a schematic diagram of an interior of a fixed shelf area according to an embodiment of the present disclosure;
FIG. 36 is a schematic diagram of an interior of a box temporary placing area according to an embodiment of the present disclosure;
FIG. 37 is a schematic diagram of a picking station according to an embodiment of the present disclosure;
FIG. 38 is a schematic diagram of AGV carrying a movable allocating wall of a picking station as well as an order box carried on the movable allocating wall according to an embodiment of the present disclosure;
FIG. 39 is a schematic diagram of a forklift taking and carrying an order box on an allocating wall of a picking station according to an embodiment of the present disclosure;
FIG. 40 is a schematic diagram of an order box in a picking station being conveyed through a conveyance line device according to an embodiment of the present disclosure;
FIG. 41 is a schematic diagram of picking operation of a picking station using a robot according to an embodiment of the present disclosure;
FIG. 42 is a schematic diagram of a quality inspection-packaging-outbound area according to an embodiment of the present disclosure;
FIG. 43 is a flowchart of a method for warehousing operation according to an embodiment of the present disclosure;
FIG. 44 is a flowchart of order picking according to an embodiment of the present disclosure;
FIG. 45 is a schematic diagram of a forklift taking a box from a shelf according to an embodiment of the present disclosure;
FIG. 46 is a schematic diagram of a forklift placing a box on a box temporary placing device according to an embodiment of the present disclosure;
FIG. 47 is a schematic diagram of an order carrying trolley taking a box from a box storage device according to an embodiment of the present disclosure;
FIG. 48 is a schematic diagram of an order carrying trolley taking a box from and placing the box in a fixed shelf area according to an embodiment of the present disclosure;
FIG. 49 is a schematic diagram of a worker allocating an item to an item allocating device on an order carrying trolley according to an embodiment of the present disclosure;
FIG. 50 is a schematic diagram of a worker allocating an item to an order box carried by an order carrying trolley according to an embodiment of the present disclosure;
FIG. 51 is a schematic diagram of a worker directly picking out an item from a box carried by an order carrying trolley and allocating the item according to an embodiment of the present disclosure;
FIG. 52 is a schematic diagram of an order carrying trolley allocating an item to an order box on a box storage device according to an embodiment of the present disclosure;
FIG. 53 is a schematic diagram of an order carrying trolley allocating an item to an order box on another order carrying trolley according to an embodiment of the present disclosure;
FIG. 54 is a schematic diagram of entering a new empty order box according to an embodiment of the present disclosure;
FIG. 55 is a schematic diagram showing that an order box of which the picking is completed is pushed to a conveying device according to an embodiment of the present disclosure;
FIG. 56 is a flowchart of replenishment according to an embodiment of the present disclosure;
FIG. 57 is a schematic diagram of an operation in a replenishment area according to an embodiment of the present disclosure;
FIG. 58 is a flowchart of inventory counting according to an embodiment of the present disclosure;
FIG. 59 is a schematic diagram of an order carrying trolley carrying a box to be inventoried to an automatic weighing device according to an embodiment of the present disclosure;
FIG. 60 is a schematic diagram of an order carrying trolley carrying the box to be inventoried to the underside of a gantry of an automatic inventory station according to an embodiment of the present disclosure;
FIG. 61 is a flowchart of returning an item and placing the item on a shelf according to an embodiment of the present disclosure; and
FIG. 62 is a flowchart of inventory sorting in an embodiment of the present disclosure.

### DETAILED DESCRIPTION

In order to make objectives, technical solutions, and advantages of the present disclosure clearer, embodiments of the present disclosure will be described below in detail with reference to accompanying drawings and embodiments. It should be understood by persons of ordinary skill in the art that in various embodiments, many technical details are proposed for the reader to better understand the present disclosure. However, the technical solutions claimed in the present disclosure may be realized even without these technical details and various changes and modifications based on the following embodiments.

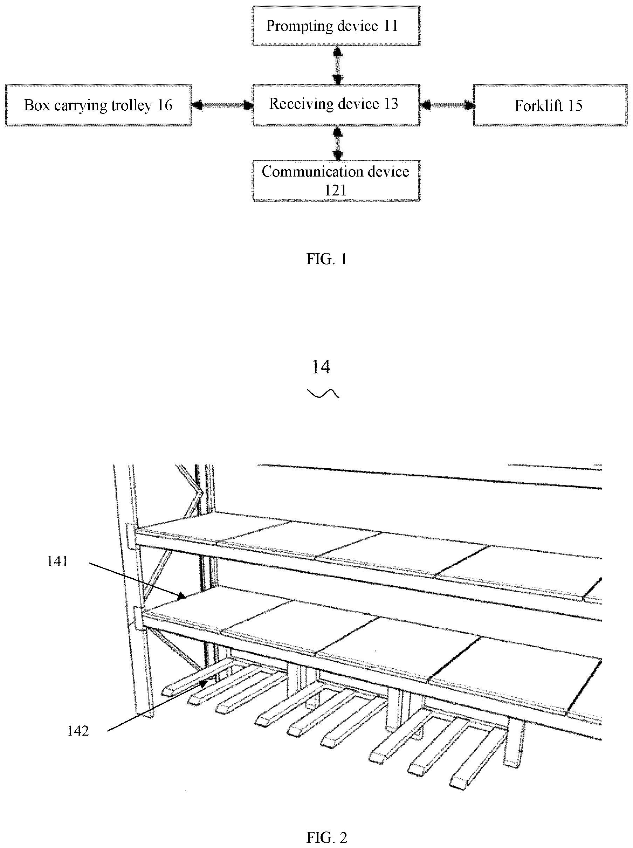

An embodiment of the present disclosure relates to a system for warehousing operation. The system for warehousing operation includes, as shown in FIG. 1, a prompting device 11 configured to receive real-time order information and prompt a worker or a picking device to pick an item according to the order information, a plurality of order carrying trolleys 12 configured to allocate the item picked by the worker or the picking device to an order box corresponding to the item, or carry the order box to transport the item picked by the worker or the picking device, and a receiving device 13 configured to receive correspondence information between each of the plurality of order carrying trolleys 12 and the item on each of the plurality of order carrying trolleys 12. Each of the plurality of order carrying trolleys 12 is provided with a communication device 121 configured to receive an allocating strategy obtained according to the correspondence information.

The prompting device 11 is provided to receive real-time order information and prompt the worker or the picking device to pick the item according to the order information, the plurality of order carrying trolleys 12 are provided to allocate the item picked by the worker or the picking device to the order box corresponding to the item, or carry the order box to transport the item picked by the worker or the picking device, and the receiving device 13 is provided to receive the correspondence information between each of the plurality of order carrying trolleys 12 and the item on each of the plurality of order carrying trolleys 12. Each of the plurality of order carrying trolleys 12 is provided with a communication device 121 configured to receive an allocating strategy obtained according to the correspondence information. That is, after picking the item, the worker or the picking device puts the picked item in the order carrying trolley to enable the order carrying trolley to perform order allocation, so that the order allocation may not be limited by the number of orders able to be stored in an order shelf in the picking station. Therefore, each worker or picking device is able to process a large number of dynamic orders at the same time, so that orders containing the hot item may be distributed to a single picking station as centrally as possible, and the worker or picking device of the picking station may handle the picking of the hot item through a continuous picking operation, thereby avoiding a problem of waiting between different picking stations caused by the orders containing the hot item from being dispersed in multiple picking stations for picking while the shelf where the hot item is located needs to visit each picking station according to a certain order, thus improving the efficiency of picking the items.

Preferably, the system for warehousing operation further includes a shelf 14 configured to store a box containing the item, and a forklift 15 configured to take the box in which the item required for an order is stored from the shelf 14 to enable the worker or the picking device to pick the item in the box. The forklift 15 is communicatively connected to the receiving device 12 to carry corresponding boxes according to the order information, the forklift 15 is used to take the box in which the item required for the order is located from the shelf 14, so that the worker or the picking device picks the item in the box. The order carrying trolley 12 is used to allocate the item picked by the worker or the picking device to the order box corresponding to the item, or the order box is carried to transport the item picked by the worker or the picking device. That is, different operations are disassembled and completed with different trolleys, so that the function needs to be realized by each trolley is simpler, thus resulting in a simpler structure, a lower equipment cost, and an improved system robustness. Meanwhile, compared with the existing technology in which a single trolley is used to simultaneously implement taking of the box from the shelf 14 and order allocation, the order carrying trolley 12 in this embodiment does not need to take the box from the shelf 14, so that the center of gravity is lower, thus a traveling speed of the order carrying trolley 12 may be adjusted faster and the carrying efficiency is higher, so that not too many order carrying trolleys 12 are required, thereby reducing the number of required trolleys and the cost.

As shown in FIG. 2, in this embodiment, the shelf 14 includes a box storage device 141 and a box temporary placing device 142 located below the box storage device 141, and the forklift 15 is configured to take the box in which the item required for the order is stored from the box storage device 141 and place the box on the box temporary placing device 142. The box temporary placing device 142 includes a plurality of mutually parallel forks and a support structure supporting the forks.

It should be noted that the system for warehousing operation may further include a box carrying trolley 16 configured to carry the box in which the item required for the order is stored on the box temporary placing device 142. The forklift 15 is used to take the box in which the item required by the order is stored from the box storage device 141 at the upper layer of the shelf 14 and place the box on the box temporary placing device 142 at the bottom layer of the shelf 14, and the box carrying trolley 16 is used to take the box in which the item required by the order is stored on the box temporary placing device 142. That is, an operation of the box to the picking station is further disassembled, and is separately performed using the forklift 15 and the box carrying trolley 16, so that the function needs to be realized by each trolley is simpler, thus resulting in a simpler structure, a lower equipment cost, and an improved system robustness. Meanwhile, compared with the existing technology in which a single trolley is used to implement the taking of the box and the carrying of the box to the picking station, the box carrying trolley 16 in this embodiment does not need to take the box from the shelf 14, so that the center of gravity is lower, thus a traveling speed of the box carrying trolley 16 may be adjusted faster and the carrying efficiency is higher, so that not too many box carrying trolleys 16 are required, thereby reducing the number of required trolleys and the cost.

It should be understood that the box temporary placing device 142 may also be provided in other positions, for example, the box temporary placing device 142 is provided separately around the picking station and adjacent to the prompting device 11. At this time, the box carrying trolley 16 is not required, which is not limited herein.

Specifically, the system for warehousing operation further includes a box temporary storage device 17 configured to temporarily store the box. The box carrying trolley 16 is configured to carry the box from the box temporary placing device 142 to the box temporary storage device 17 or to a position adjacent to the prompting device 11 according to a picking priority of the item in the box. If the box needs to be picked immediately, the box carrying trolley 16 will directly carry the box to the corresponding picking station. If the box does not need to be picked immediately, the box carrying trolley 16 will carry the box and place the box on the box temporary storage device 17 in a box temporary storage area. After a condition that the box needs to be picked is triggered, the box carrying trolley 16 will carry the box to the corresponding picking station.

That is, items stored in the warehouse are all stored in containers such as those boxes placed on the fixed shelves 14 of which the placement is similar to a conventional manual warehouse. The picking of the entire warehouse is in an item-to-person mode, two different robots (i.e., the forklift 15 and the box carrying trolley 16) that are responsible for carrying the boxes to the picking station are provided, and the system prompts the workers to pick. The items picked by the worker are placed in another robot (i.e., the order carrying trolley 12) that is responsible for allocating the items to corresponding orders. Orders of which the picking is completed are automatically pushed by the robot to a quality inspection and packaging area.

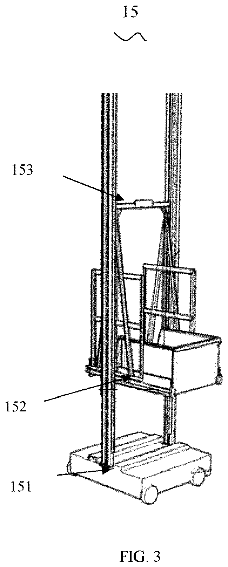

As shown in FIG. 3, specifically, the forklift 15 may include a movable chassis 151, a lift device 152 disposed on the movable chassis 151, and a fork device 153 disposed on the lift device 152. The fork device 153 includes a chute retractable in a direction perpendicular to a lift direction of the lift device 152, and a stopper disposed on the chute. The chassis 151 is responsible for the movement of the forklift in the warehouse. A navigation mode includes, but is not limited to, a plurality of navigation or hybrid navigation modes such as laser, two-dimensional code, vision, magnetic strip, track, etc. The lift device 152 is responsible for the lifting of the fork device 153, and the fork device 153 is responsible for taking the box from or placing the box on the box temporary placing device 142 or the box storage device 141.

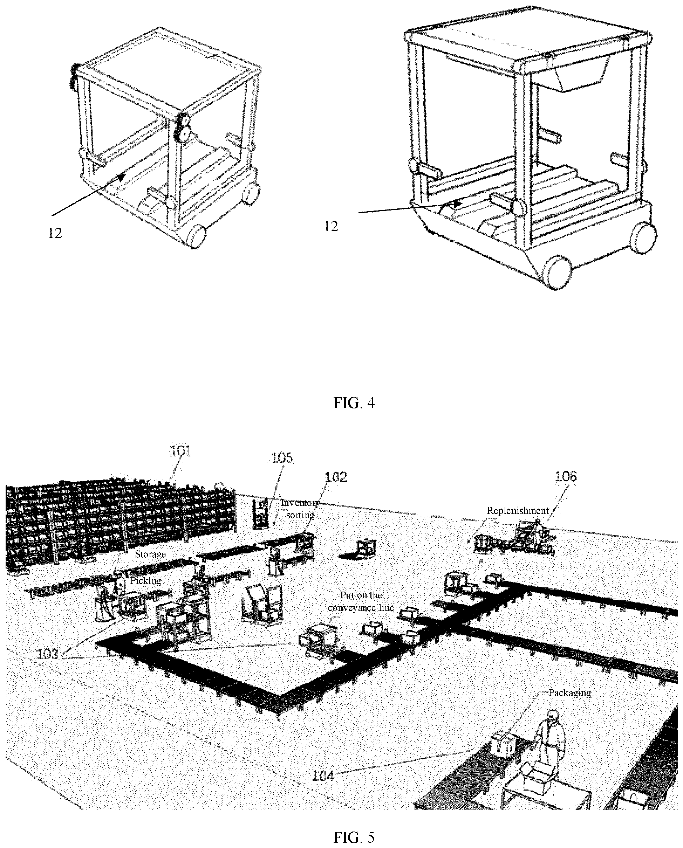

FIG. 4 is a schematic diagram of the order carrying trolley 12. This diagram shows structural designs of two possible order carrying trolleys 12. The order carrying trolley 12 has various functions such as picking and placing of the box, carrying of the box, and allocating of the items to the box. The structure of the order carrying trolley 12 includes a movable chassis, a box placing device, a box limiting device and an item allocating device. The movable chassis is mainly responsible for the motion of the order carrying trolley 12. The navigation mode includes, but is not limited to, a plurality of navigation or hybrid navigation modes such as laser, two-dimensional code, vision, magnetic stripe, track, etc. During carrying of the box, the box is placed on the box placing device. The box limiting device has various uses, including taking and placing the box, preventing the box from shaking during the movement, pushing the box out of the box temporary storage device, etc. The item allocating device is mainly configured to carry the items and allocate the items to a corresponding order box. The allocating device may be a flap or a belt with power.

For ease of understanding, examples are given below.

FIG. 5 is a layout of an interior of a warehouse in an embodiment of the present disclosure. The entire warehouse is divided into several different functional areas which include a fixed shelf storage area 101, a box temporary storage area 102, a picking and allocating area 103, and a quality inspection-packaging-outbound area 104. The fixed shelf storage area 101 is mainly responsible for long-term storage of items. The box temporary storage area 102 is mainly responsible for temporary storage of the box to be picked. The picking and allocating area 103 is mainly responsible for picking and allocating orders; The quality inspection and packaging outbound area 104 is mainly responsible for quality inspection, packing and outbound of the orders. In addition, based on operation requirements of the warehouse, a replenishment station 106 and an inventory counting station 105 may be set in the warehouse to be responsible for the replenishment and inventory counting in the warehouse respectively.

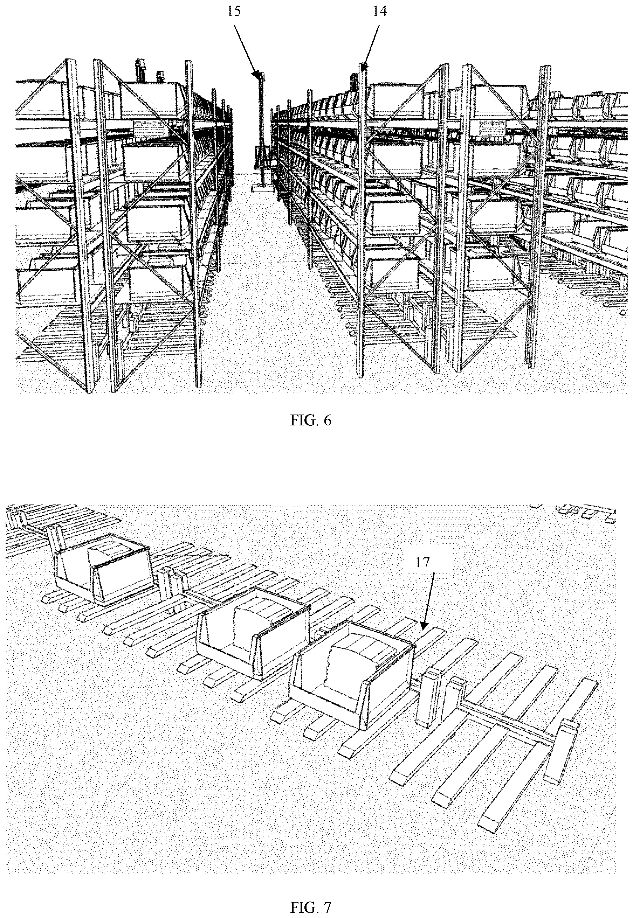

FIG. 6 shows details of an interior of the fixed shelf storage area 101. The fixed shelves 14 may be placed in this area and may have variously different forms of placement, and FIG. 6 shows a back-to-back manner of two rows of shelves 14. Each shelf 14 may have a plurality of storage places, i.e., box storage devices 141, on which one or more boxes may be placed. The bottom layer of the shelf is a box temporary placing device 142 for placing the boxes. One or more forklifts 15 may be arranged in this area, the function of the forklifts 15 is to take the boxes from the upper layers of the shelf 14 and place the boxes on the box temporary placing device 142 on the first layer (i.e., the bottom layer), or to take the boxes from the box temporary placing device 142 and place the boxes on the storage spaces on the upper layers of the shelf 14. The forklifts 15 may move in a lane between the shelves 14, or may move outside a shelf 14 and next to a different shelf 14.

FIG. 7 shows details of an interior of the box temporary storage area 102. One or more box temporary storage devices 17 may be arranged in this area. These box temporary storage devices 301 may be the same as or be different from the box temporary placing devices 142 in the fixed shelf area. The boxes may be stored on the box temporary storage device 17, and different items may be stored in the boxes. The items stored in this area are mainly used for order picking. The item that is expected to be not required for the order for a long time in the future may not be placed in this area, thus facilitating quick turnover of the items to be picked.

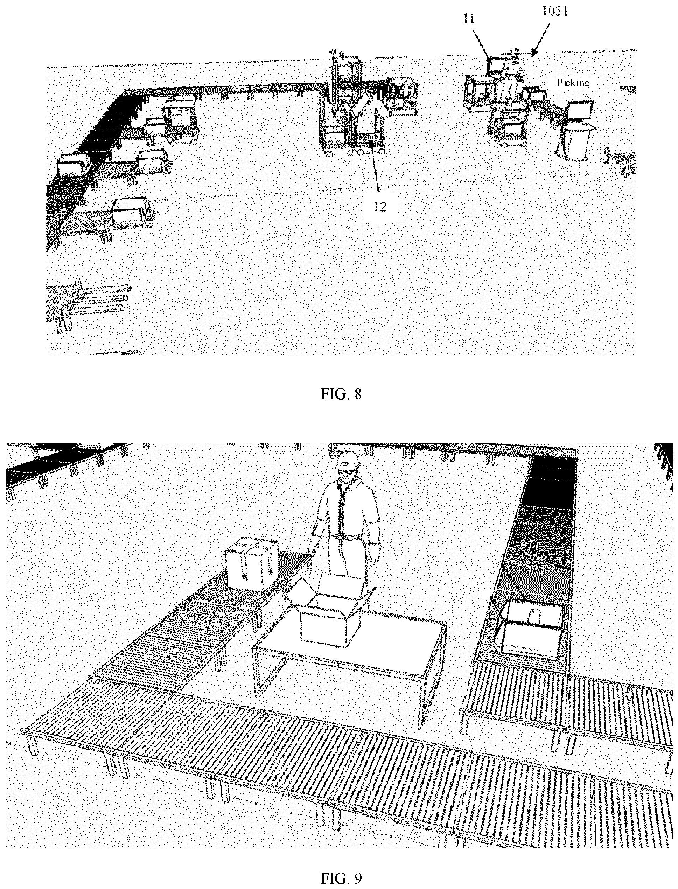

FIG. 8 shows the picking and allocating area 103. One or more picking stations 1031 may be arranged in this area, which are equipped with devices such as PC/PTL to assist the picking of workers. Next to the picking station 1031, there may be one or more box temporary storage devices 17 configured to store the box to be picked in the picking station 1031. In the picking process, a carrying trolley may park next to the picking station 1031, the picking worker picks out an item from a corresponding box and places the item on the order carrying trolley 12, and then the order carrying trolley 12 allocates the item to the corresponding order box. The order box may be stored on the fixed order box temporary storage device 17 or on the order carrying trolley 12. After the order picking is completed, the item is conveyed out of this area by the conveyance device to the quality inspection-packaging-outbound area 104.

FIG. 9 shows the quality inspection-packaging-outbound area 104. One or more quality inspection and packaging stations may be arranged in this area, and quality inspection and packaging workers complete quality inspection and packaging operations at the quality inspection and packaging station. The order box and items in the order box are conveyed by the conveyance device from upstream to the quality inspection and packaging station, and then the quality inspection and packaging worker takes the items in the order out of the order box, performs quality inspection on the items, puts the items into an order package box, and then packages the order package box. The packaged order packages are conveyed outbound or to an outbound temporary storage area through the conveyance device. After the quality inspection and packaging operation is completed, an empty order box is conveyed back to the picking and allocating area through another conveyance device to become a new order box.

Compared with the existing technology, in the embodiments of the present disclosure, only picking is performed manually. No judgment needs to be made on the picked items nor on the orders for item allocating. In this way, invalid operations of the workers are reduced, and the working efficiency of the workers is greatly improved. Meanwhile, in the system, each of the forklift 15 and the order carrying trolley 12 performs their own duties, i.e., they only do the work they are best at, so that a use rate of each kind of robot is higher, the robustness of the entire system is higher, and the cost is lower. And the design of the system is highly flexible, so that deployment cost of the entire system is low, reconstruction of the warehouse is small, and software level optimization is adopted to adapt to changes of the service. In the case of a large-scale order peak, orders are processed manually and collaboratively, so that the entire system has great peak elasticity. In addition, in the present disclosure, the system effectively processes a variety of different order structures such as high-time-limit orders, hot-item order, and the like through algorithm optimization.

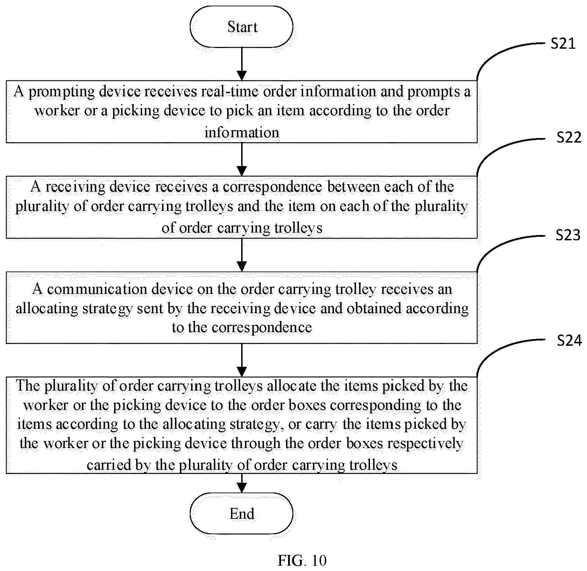

An embodiment of the present disclosure relates to a method for warehousing operation, as shown in FIG. 10, which includes the following operations.

In S21, a prompting device receives real-time order information and prompts a worker or a picking device to pick an item according to the order information.

Specifically, the prompting device 11 may be provided at the picking station, the worker or the picking device performs the picking of items required for the order according to the order information displayed on the prompting device 11, or the prompting device 11 sends the order information to an automatic picking device such as a robot, so that the automatic picking device performs the picking of the items required for the order according to the received order information.

Preferably, the prompting device 11 preferentially receives order information of orders containing the same item, so that it is possible to ensure that items contained in a larger number of orders can be picked from the box carried one time, thereby improving the efficiency of picking items.

In S22, a receiving device receives correspondence information between each of the plurality of order carrying trolleys and the item on each of the plurality of order carrying trolleys.

The receiving device 13 may be a server or a local processor configured to receive the correspondence information between each of the plurality of order carrying trolleys 12 and the item on each of the plurality of order carrying trolleys 12. Specifically, the receiving device 13 receives a box ID, the number of the items placed in the box, a storage address of the box, and a picking record of the worker or the picking device, thus the correspondence information between the order carrying trolley 12 and the items on the order carrying trolley 12 is obtained, thereby facilitating subsequent control of the order carrying trolley 12 to carry the items required for the order to a corresponding packing area.

In S23, the communication device on the order carrying trolley receives an allocating strategy sent by the receiving device and obtained according to the correspondence information.

Specifically, the communication device 121 is communicatively connected to the receiving device 13, so as to acquire the allocating strategy sent by the receiving device 13 and obtained according to the correspondence information, and the order carrying trolley 12 moves to a correct position according to the allocating strategy for packaging and outbound.

In S24, the plurality of order carrying trolleys allocate the items picked by the worker or the picking device to the order boxes corresponding to the items according to the allocating strategy, or carry the items picked by the worker or the picking device through the order boxes respectively carried by the plurality of order carrying trolleys.

Specifically, if the worker or the picking device picks the item into the allocating device of the order carrying trolley 12, the order carrying trolley 12 moves to the designated position according to the allocating strategy, and then allocates the item on the allocating device into the corresponding order box. If the worker or the picking device picks the item into the order box carried by the order carrying trolley 12, the order carrying trolley 12 moves to the designated position according to the allocating strategy, and then the worker, the picking device or the device directly packages the order box carried by the order carrying trolley 12.

Alternatively, before the operation S21, the method may further include taking, by a forklift 15, the box in which the item required for an order is stored from the shelf 14 to enable the worker or the picking device to pick the item in the box.

Furthermore, the forklift taking the box in which the item required for the order is stored from the shelf 14 to enable the worker or the picking device to pick the item in the box further includes the following operations. That is, the forklift 15 takes the box in which the item required for the order is stored from the box storage device 141 at the upper layer of the shelf 14 and places the box on the box temporary placing device 142 at the bottom layer of the shelf 14. After the forklift 15 takes the box in which the item required for the order is stored from the shelf 14 to enable the worker or the picking device to pick the item in the box, the method further includes the following operations. That is, a box carrying trolley 16 carries the box in which the item required for the order is stored on the box temporary placing device 142.

It should be noted that, before the plurality of order carrying trolleys 12 allocate the items picked by the worker or the picking device to the order boxes corresponding to the items, or carry the items picked by the worker or the picking device through the order boxes respectively carried by the plurality of order carrying trolleys, the method further includes the following operations. That is, the order carrying trolley 12 acquires an empty order box from an order box injection port, bands the order with the empty order box according to the order information, and determines whether the item required by the bound order exists in a picking station where the prompting device 11 is located. In response to the item required by the bound order existing in the picking station where the prompting device 11 is located, the order carrying trolley 12 is drive to move to the picking station. In response to the item required by the bound order not existing in the picking station where the prompting device is located, the order carrying trolley 12 places the empty bound order box on an order temporary storage shelf, and takes another order box from the order box injection port. Since the order cannot be picked immediately when there is no item required for the bound order in the picking station, at this time, that the order carrying trolley 12 places the empty bound order box on the order temporary storage shelf and takes another order box from the order box injection port avoid a problem of low efficiency caused by waiting for the picking of the order.

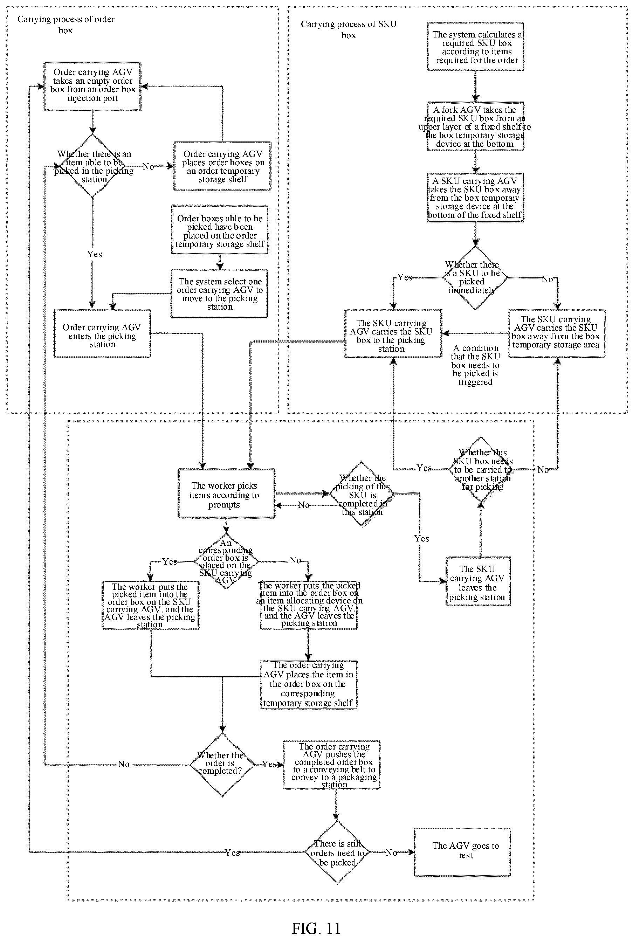

FIG. 11 shows an order picking process for the system in the present disclosure. The order picking process may be divided into three processes: 1. a box carrying process; 2. an order box carrying process; 3.a picking process. The box carrying process describes the process that the box to be picked is carried to the picking station in the system. The order box carrying process describes the process that the order box or the carrying trolley is carried to the picking station in the system. The picking process describes the process of the picking of orders and subsequent order allocating.

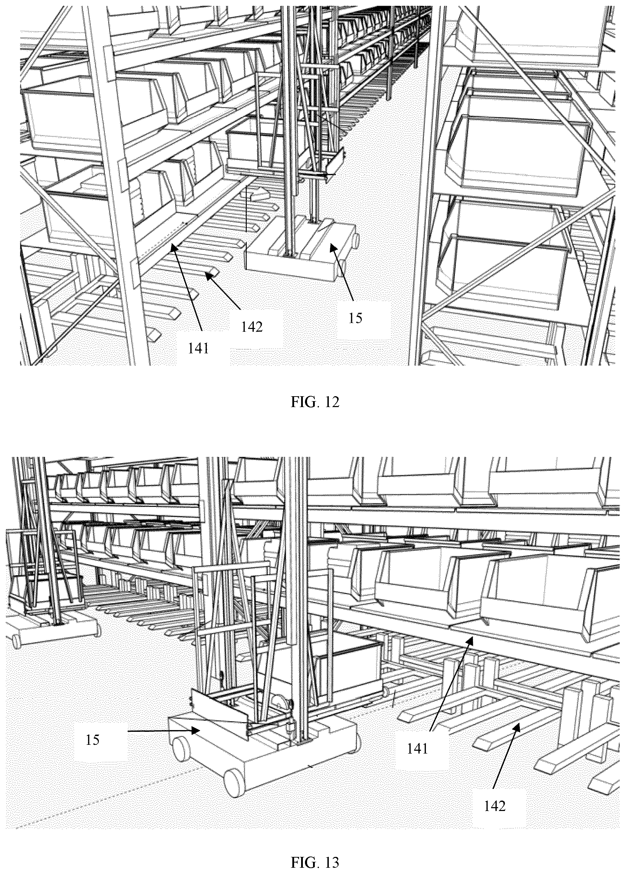

FIG. 12 shows a schematic diagram of a process in which the forklift 15 takes a box from a storage place of the fixed shelf 14. The forklift 15 is driven to a storage place corresponding to the box according to a command of the system, and the fork device is adjusted to a height corresponding to the storage place by the lifting device, and then the box is taken out of the storage place. In a process of the forklift 15 moving without carrying any box, the height of the fork device may be adjusted in advance by the lifting device.

FIG. 13 shows a schematic diagram of a process in which the forklift 15 places the box at the bottom layer of the fixed shelf area 14. As shown in FIG. 12, after the forklift 15 takes the box from the upper layer of the fixed shelf 14, the box is placed on the bottom layer of the box temporary placing device 142. After taking the box, the forklift 15 adjusts the height of the fork device to the bottom layer of the box temporary placing device 142 by the lifting device, and then places the box on the box temporary placing device 142 by the fork device. In the case where the forklift 15 is loaded (i.e., there is a box in the fork device), the chassis of the forklift remains stationary during the lifting device adjusting the height of the fork device, which prevents the forklift from shaking due to height adjustment during moving. This kind of limitation does not significantly reduce the efficiency of the forklift 15 because in most cases the forklift 15 does not move too far when placing the box.

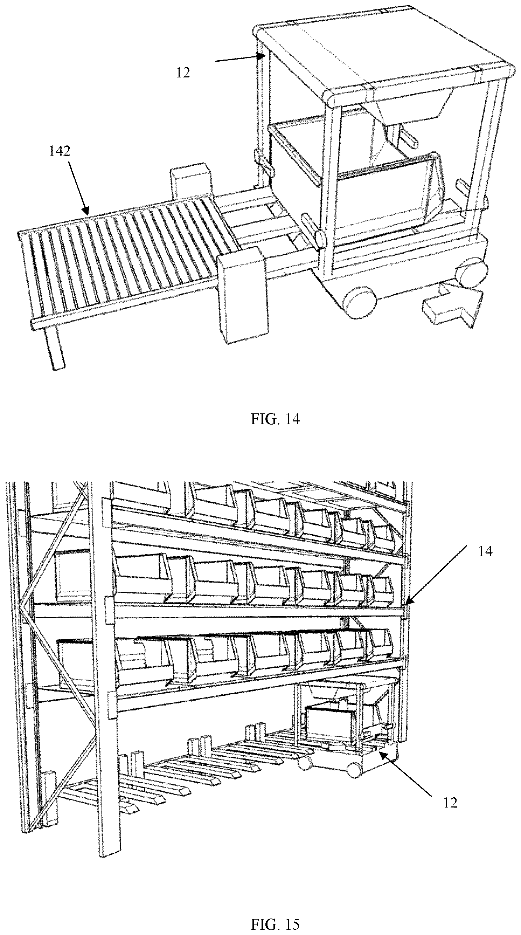

FIG. 14 shows a schematic diagram of the process in which the order carrying trolley 12 takes the box from the box temporary placing device 142. The box is originally placed on the box temporary placing device 142. The order carrying trolley 12 first sets the limiting device to a non-limiting state and moves to a place under the box temporary placing device 142, and then sets the limiting device to a limiting state and moves outward during which the box is brought down from the box temporary placing device 142 and placed on a box placement device of the order carrying trolley 12. A power mechanism used in the process of taking the box only includes the limiting device, so the whole process has high robustness and is not prone to failure. A reverse process of the process of taking the box can realize a process of the order carrying trolley 12 placing the box on the box storage device 141, and details are not described herein.

FIG. 15 shows a schematic diagram of the order carrying trolley 12 taking the box from and placing the box in a fixed shelf area. The specific process is similar to that in FIG. 14, thus details are not described herein.

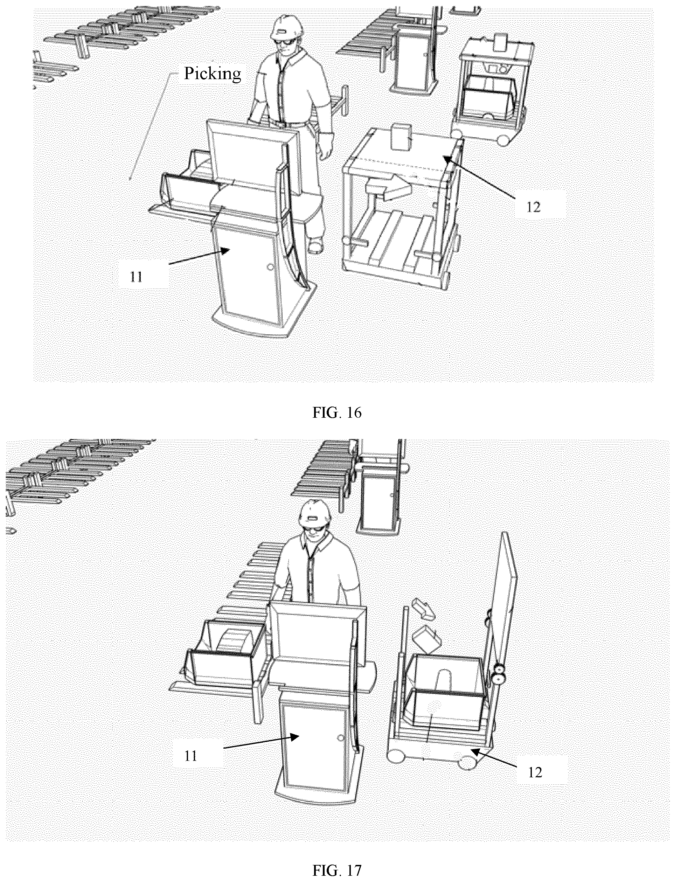

FIGs. 16 and 17 show picking processes of the worker in the picking station, which describe two different picking and allocating modes. FIG. 16 shows the picking worker allocating the item to the item allocating device on the order carrier trolley 12 after the picking operation is completed. FIG. 17 shows the picking worker allocating the item into the order box carried by the order carrying trolley 12.

FIG. 16 shows a flow of picking and allocating of the worker in the picking station. The box has previously been carried and placed by the order carrying trolley 12 on the box storage device 141 at the picking station before the picking. The picking worker picks the corresponding number of items from the box according to the prompting device 11, and then places the items on the item allocating device of the order carrying trolley 12. Then, the order carrying trolley 12 leaves the picking station, moves to the corresponding order box, and allocates the items to the corresponding order box. If the items stored in this box is no longer needed after the picking operation is completed, another order carrying trolley 12 is going to move this box away from the picking station. In this picking process, the picking workers do not have to judge the picked items and orders for allocating, so that the picking efficiency is greatly improved.

FIG. 17 also shows a flow of picking and allocating of the worker in the picking station. Unlike FIG. 16, in this case, the order carrying trolley 12 carries the order box to the picking station. Therefore, after picking the items, the picking worker will allocate the items directly into the order box carried by the order carrying trolley 12. In the allocating process of the worker, the item allocating device of the order carrying trolley 12 is opened to facilitate the worker to allocate the items into the item allocating device.

In an actual picking process, both allocating modes of FIGs. 16 and 17 may exist, or only one of the allocating modes of FIGs. 16 and 17 may be used. When a certain order box can be carried to the picking station in a short time, the mode in FIG. 17 is preferred. However, in the case where the order box cannot be carried to the picking station in a short time, the mode in FIG. 16 is preferred. Therefore, it is not needed to wait for both corresponding boxes and order boxes to arrive the picking station in the order picking and allocating process, so that the waiting time of the picking workers is greatly reduced and the picking efficiency is improved.

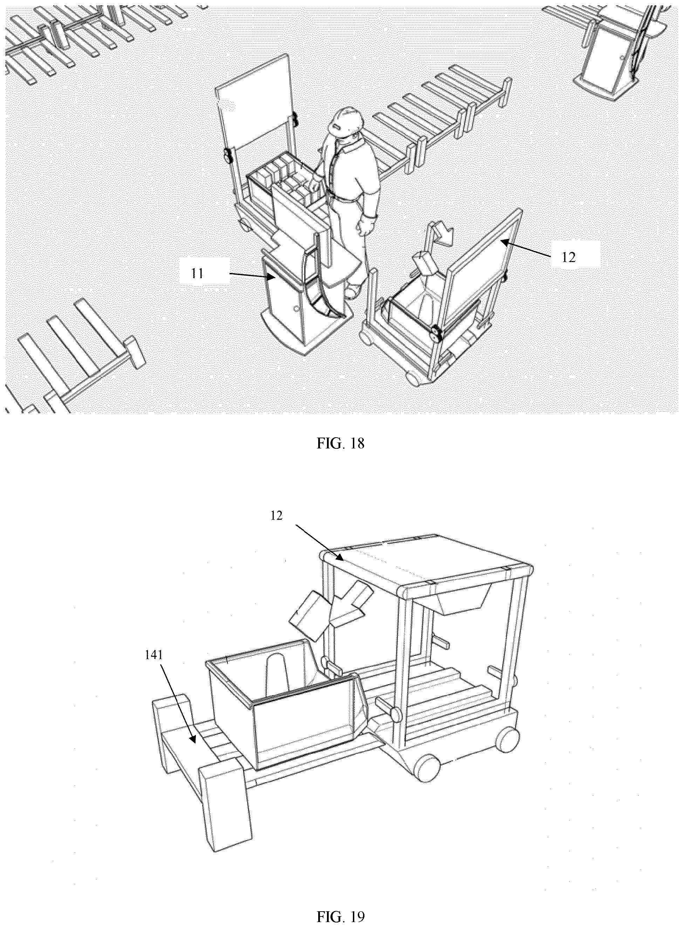

FIG. 18 shows another mode of picking at the picking station. In this mode, the box is directly carried by the order carrying trolley 12 to the picking station without placing the box on the box storage device 141 of the picking station. The picking worker picks items directly from the corresponding box carried by the order carrying trolley 12 and allocating the items. During this picking process, the item allocating device of the order carrying trolley 12 may be opened to facilitate the picking worker's operation. After the picking is completed, the order carrying trolley 12 moves the box away from this picking station if the items in this box is no longer required by this picking station. This picking mode is suitable for picking boxes with low demand, which saves the time of box placement and removal.

If the items are placed on that item allocating device of the order carrying trolley 12 after the picking operation at the picking station, the order carrying trolley 12 needs to allocate the items into the corresponding order box.

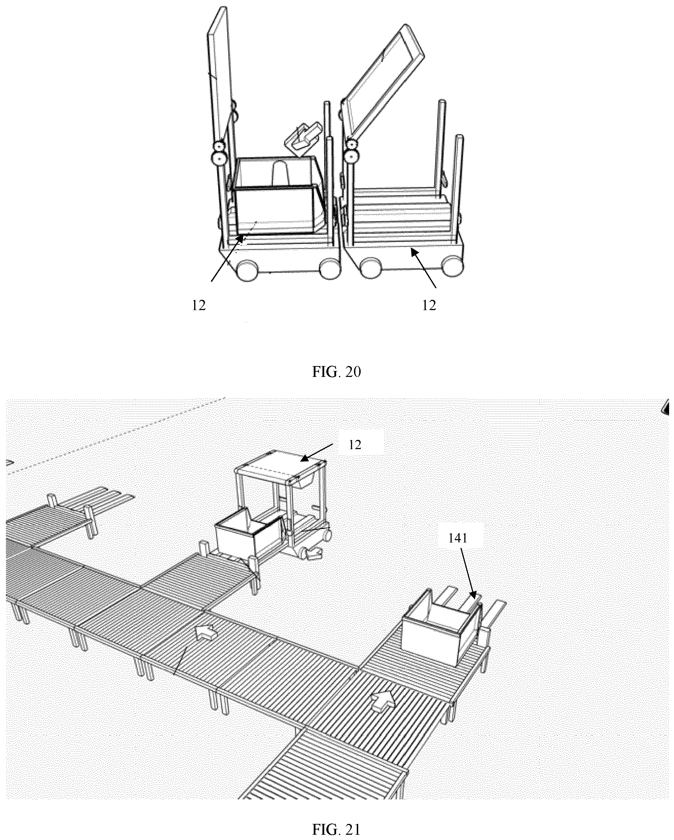

FIGs. 19 and 20 show two modes of automatically allocating of the order carrying trolley 12.

FIG. 19 shows one mode of the order carrying trolley 12 allocating items into the order box. In this mode, the order box has been previously placed on the box storage device 141, the order carrying trolley 12 carries an item to be allocated to the vicinity of the order box, then the item allocating device is activated to allocate the item into the order box, and the order carrying trolley 12 then leaves this order box area.

FIG. 20 shows another allocating mode of dynamically moving. In this mode, the order box is placed on the order carrying trolley 12 instead of on the box storage device 141. The system dispatches the carrying trolley carrying the item and the carrying trolley carrying the order box to meet at a place in the station, and the item allocating device of the carrying trolley carrying the order box may be opened to facilitate the carrying trolley carrying the item to activate the item allocating device and allocate the item into the corresponding order box. When this allocating operation is completed, these two order carrying trolleys 12 move away from this place to continue subsequent operations.

The following describes an order box carrying process.

The order box carrying process is similar to that in FIG. 14, and thus will not be repeated herein.

FIG. 21 shows a process of entering a new empty order box. An empty order box is transported from the quality inspection-packaging-outbound area to the picking and allocating area by a conveying device and the empty order box is placed on the box storage device 141 at an entrance of the empty order box. The system dispatches the order carrying trolley 12 to the entrance of the empty order box, and takes the order box for subsequent picking and allocating operations.

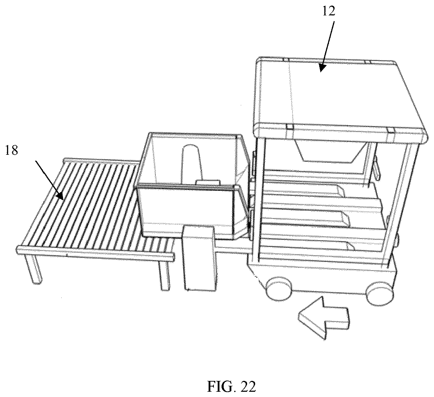

FIG. 22 shows a schematic diagram of the order box of which the picking is completed being pushed to the conveying device 18. After the picking and allocating operation of the order corresponding to the order box is completed, the system dispatches the carrying trolley to the vicinity of the box storage device 141 where the order box is placed, and then the order carrying trolley 12 sets the limiting device in the limiting state and moves to the inside of the box storage device 141. The limiting device thus is in contact with the order box and pushes the order box onto the conveying device 18. The conveying device 18 then conveys the order box to the quality inspection-packaging-outbound area.

The order picking process in the system of the present disclosure is efficient for the picking workers and has a low error rate. All box carrying, order box carrying, and order allocating are operations, which significantly reduce the demand for warehouse personnel. For different order structures, sequences of the boxes and the order boxes entering the picking station may be planned through algorithm optimization, so that the picking efficiency is maximized and the waiting time as well as invalid box carrying of the picking workers are reduced.

In addition to order picking, operations of the warehouse replenishment, inventory counting, retuning and placing the item on the shelf, inventory sorting and other aspects have also been intelligently upgraded.

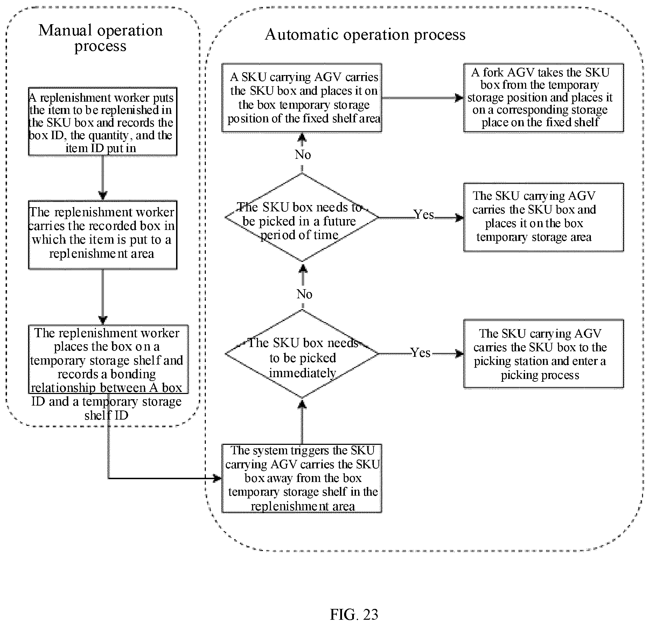

FIG. 23 is a flowchart of replenishment in the system of the present disclosure. This replenishment process is divided into a manual operation section and an operation section. In a process of the manual operation section, a replenishment worker first puts the items to be replenished into the box, and records the box ID, the quantity to be put in, and the box ID to be put in through the equipment such as PC and RF. This operation may be done on any place. The replenishment worker then carries the boxes in which the items have been put to a replenishment area, then places the boxes one by one on the box storage device 141 in the replenishment area, and records a binding relationship between box IDs and temporary storage device IDs through equipment such as PCs (i.e., computers), RFs (i.e., handheld terminal devices), and the like. After receiving the binding relationship, the system activates an operation flow, and dispatches the order carrying trolley 12 to carry these boxes to be put on the shelf. The system determines carrying and storage destinations of these boxes based on picking priorities of these boxes. For boxes to be picked immediately, the order carrying trolley 12 directly carries these boxes to the picking station for picking. For boxes for which the system determines need to be picked in a future period of time, the order carrying trolley 12 carries and place these boxes on the box storage device 141 in the box temporary storage area. For boxes for which the system determines do not need to be picked for a long period of time, the order carrying trolley 12 carries these boxes to the area where the fixed shelf 14 is, and then the forklift 15 places these boxes on the storage places of the fixed shelf 14 for storing.

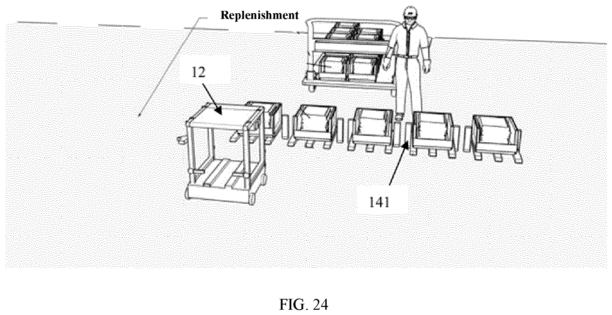

FIG. 24 is a schematic diagram of an operation in the replenishment area. The replenishment worker carries the box stored with the items to be replenished to the replenishment area. This carrying process is not scheduled by this system, and may be carried by trolleys, forklifts, conveying devices and other conveying devices as shown in the figures. The replenishment worker then places the box to be replenished on the box storage device 141 in the replenishment area and records the binding relationship. The system dispatches the order carrying trolley 12 to carry the boxes and store the boxes in corresponding storage places.

In this replenishment process, the manual operation is mainly to put the items into the box, and this operation may be decoupled from other processes of replenishment and picking, so the efficiency of the manual operation is high. After the box is manually placed on the box storage device 141 in the replenishment area, a storage location of the box is completely determined by the system through an algorithm, which reduces manual operations and optimizes the inventory distribution throughout the warehouse.

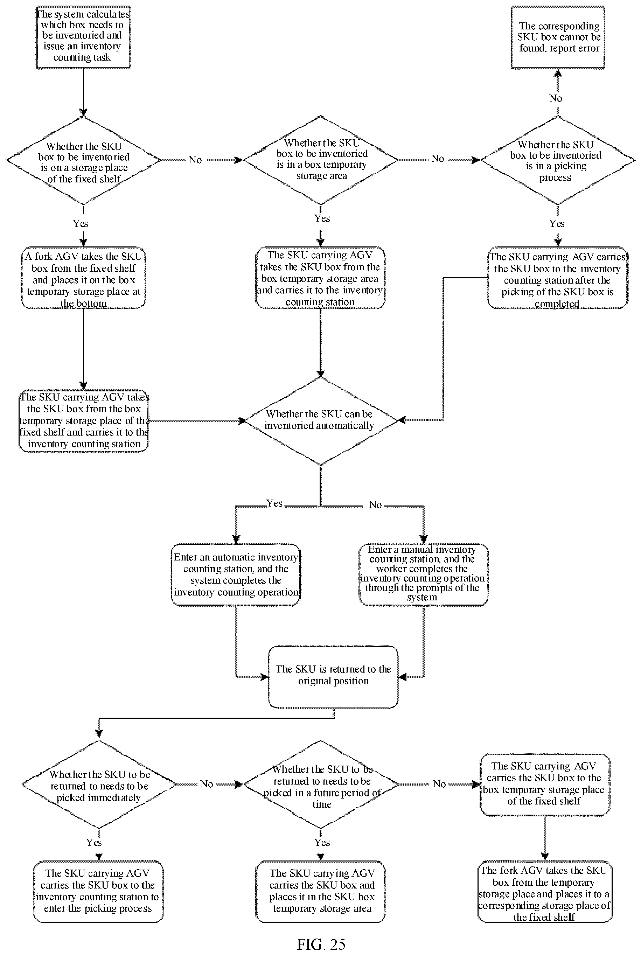

FIG. 25 is a flowchart of inventory counting in the system of the present disclosure. First, the system calculates which boxes need to be inventoried based on recently picked or replenished boxes. Since there are only several operations such as picking and replenishment of the inventory in this system are interacted with human beings, boxes that have not undergone these operations do not need to be inventoried. The system calculates the boxes to be inventoried through the algorithm, considering a sale attribute, physical attribute, inventory depth and other factors. Some of these boxes may be stored on the fixed shelf 14, some may be placed on the box temporary storage positions, and some may be in the picking process. According to these different inventory statuses, the system separately dispatches the forklifts 15 to carry these boxes to the inventory counting station. Some boxes able to be inventoried are carried to an automatic inventorying counting station; Other boxes are carried to a manual inventory counting station for manual inventory counting. After the inventory counting is completed, the system determines a subsequent destination and storage position of the box according to a picking priority of the box. This process is similar to the process of replenishment.

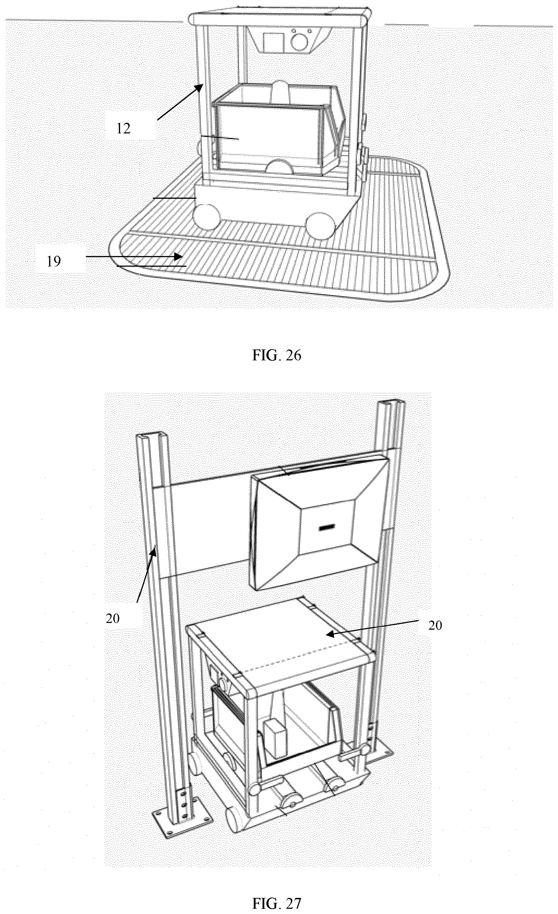

FIGs. 26 and 27 are schematic diagrams of an inventory counting station.

As shown in FIG. 26, the order carrying trolley 12 carries a box to be inventoried onto an automatic weighing device 19. The system records the overall weight, and calculates the number of items in the box according to the weight of the box itself recorded by the system, thereby achieving the purpose of inventory counting. This automatic inventory counting method applies to the inventory counting of items having a large weight gap with other boxes in this warehouse.

As shown in FIG. 27, the order carrying trolley 12 carries a box to be inventoried to the underside of a gantry 20 of the automatic inventory counting station. A radio frequency identification (RFID) reader is installed on the gantry to automatically read the quantity of the items in the box and complete the inventory counting operation. This automatic inventory counting operation applies to items installed with RFID.

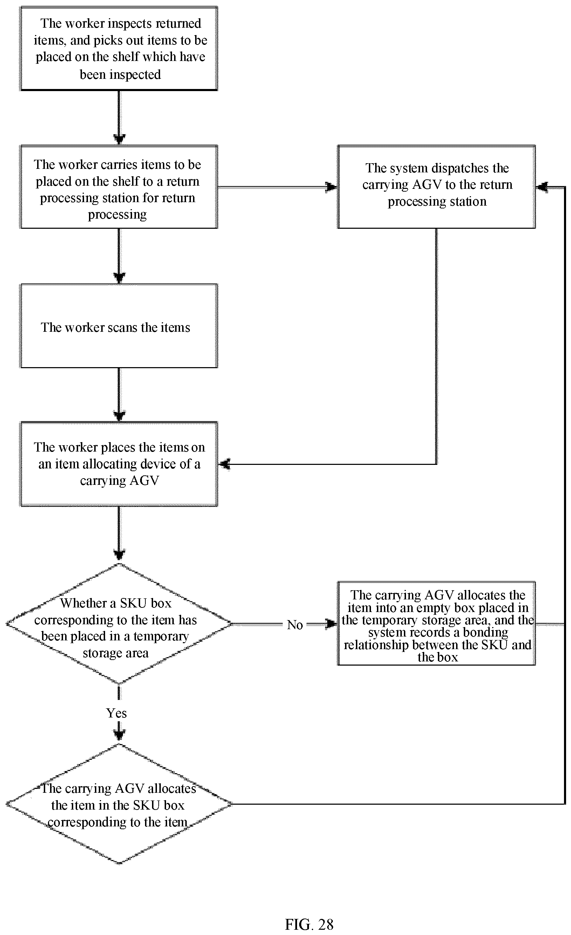

FIG. 28 is a flowchart of returning an item and placing the item on a shelf in the system of the present disclosure. In this process, only a quality inspection of returned items and a scanning operation of the returned items need to be performed manually. The picking, allocating, and placing of the returned items will be completed automatically by the system. First, the returned items are manually inspected, items to be placed on the shelf which have qualified quality are picked out, and then these items are carried to a return processing station. The worker at the return processing station scans the returned items one by one and places them on the allocating devices of the order carrying trolleys 12. These order carrying trolleys 12 allocate the items to corresponding boxes. If a box corresponding to the box is already stored in the box temporary storage area, the order carrying trolley 12 directly allocates the items to this box. Otherwise, the order carrying trolley 12 allocates the items into a new empty box, and the system records a box-to-box binding relationship. After operations of returning, picking, and allocating are completed, the system then dispatches the order carrying trolley 12 to replenish and place the boxes.

After operations such as picking, replenishment, returning, etc. are completed, the inventory distribution of some boxes may be fragmented. For example, a box has only 3 items in total, but the 3 items are placed in three different boxes. This kind of inventory defragmentation reduces the capacity utilization of the entire warehouse, so the defragmented inventory may be reorganized through the inventory sorting to improve the capacity utilization of the warehouse.

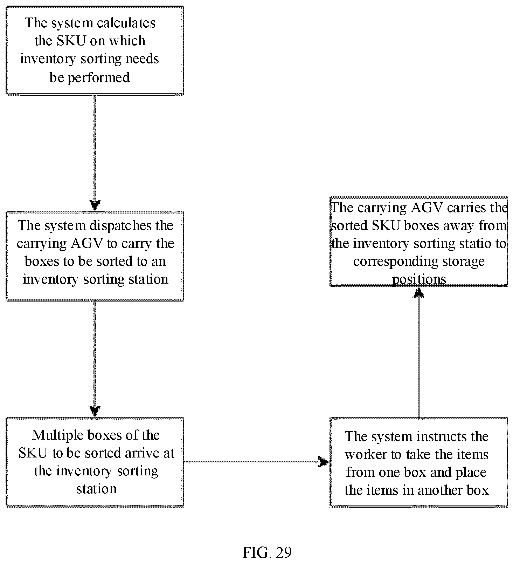

FIG. 29 is a flowchart of inventory sorting in the system of the present disclosure. The system calculates boxes to be sorted according to a real-time inventory status, and dispatches the order carrying trolley 12 to carry the boxes to the corresponding inventory sorting station. When multiple boxes storing the items of a single box arrives at an inventory sorting station, the system instructs the worker to take the items from one box and place the items in another box. In this process, the workers may also be asked to count the quantity and do the inventory counting. When the inventory sorting operation is completed, the system dispatches the order carrying trolley 12 to move the boxes away from the inventory sorting station and to carry the boxes according to the picking priorities of the boxes and store the boxes in corresponding storage positions. After the inventory sorting operation is completed, the empty box may be used as a new box for replenishment. The inventory sorting station may be shared with the inventory counting station or the picking station.

Compared with the existing technology, in the embodiments of the present disclosure, the prompting device 11 receives the real-time order information and prompts the worker or the picking device to pick the item according to the order information. Each prompting device 11 preferentially receives order information of orders containing the same item. The receiving device 13 receives the correspondence information between each of a plurality of order carrying trolleys 12 and the item on each of the plurality of order carrying trolleys 12. The communication device 121 provided on each of the plurality of order carrying trolleys 12 receives the allocating strategy sent by the receiving device 13 and obtained according to the correspondence information. The plurality of order carrying trolleys 12 allocate the item picked by the worker or the picking device to the order box corresponding to the item, or carry the order box to transport the item picked by the worker or the picking device. That is, after picking the item, the worker or the picking device puts the picked item in the order carrying trolley 12 to enable the order carrying trolley 12 to perform order allocation, so that the order allocation may not be limited by the number of orders able to be stored in an order shelf in the picking station. Therefore, each worker or picking device is able to process a large number of dynamic orders at the same time, so that orders containing the hot item may be distributed to a single picking station as centrally as possible, and the worker or picking device of the picking station may handle the picking of the hot item through a continuous picking operation, thereby avoiding a problem of waiting between different picking stations caused by the orders containing the hot item from being dispersed in multiple picking stations for picking while the shelf 14 where the hot item is located needs to visit each picking station according to a certain order, thus improving the efficiency of picking the items.

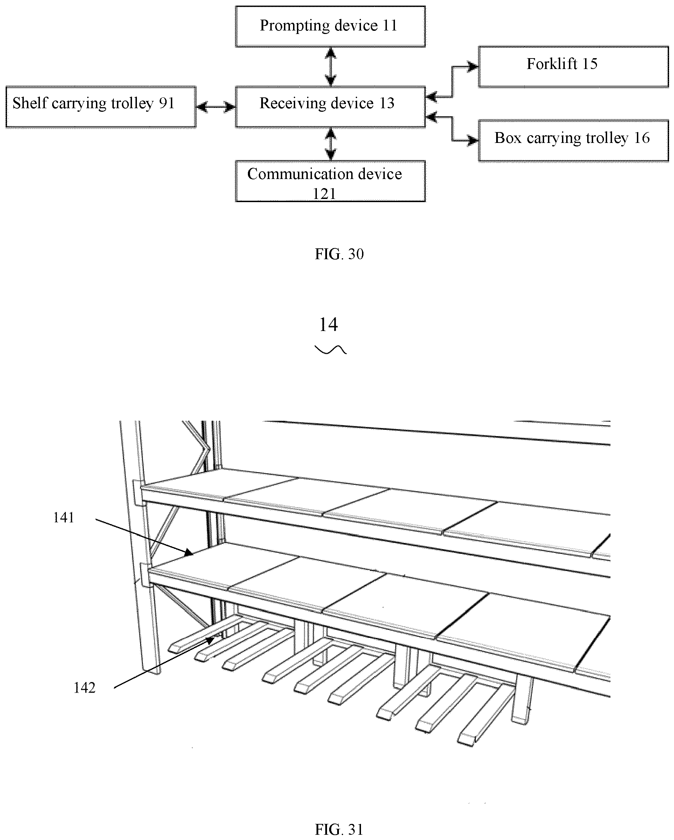

An embodiment of the present disclosure relates to a system for warehousing operation, as shown in FIG. 30, which includes a prompting device 11 configured to receive real-time order information and prompt a worker or a picking device to pick an item according to the order information, an allocating device 12 configured to carry an order box to store and/or carry the item picked by the worker or the picking device, and a receiving device 13 configured to receive correspondence information between the allocating device 12 and the item on the allocating device 12. The allocating device 12 is provided with a communication device 121 configured to receive and prompt an allocating strategy obtained according to the correspondence information, and the allocating device 12 may include any one or a combination of an order allocation wall fixedly disposed, a movable allocation wall and a conveyance line capable of carrying the order box.

The prompting device is used to receive the real-time order information and prompt the worker or the picking device to pick the item according to the order information, so that the worker or the picking device picks items according to the real-time order information. The allocating device is used to allocate the item picked by the worker or the picking device into the corresponding order box. The receiving device is used to receive the correspondence information between the box on the order box allocating device and the item on the box. The allocating device is provided with the communication device configured to receive and prompt the allocating strategy obtained according to the correspondence information. That is, after picking the item, the worker or the picking device puts the picked item into the corresponding order box. When the picking of a part or all of the orders on the order box allocating device is completed at this station, the system dispatches the worker or a shelf carrying trolley to carry the allocating device loaded with the order box to another workstation or a temporary storage area, or carries the order box to other workstations or storage areas through a forklift or the conveyance line, so as not to be limited by the number of orders able to be stored in the order shelf in the picking station, so that each worker or picking device is capable of continuously processing a large number of dynamic orders, thereby improving an utilization ratio of order storage and allocating positions of the picking station and the work efficiency of the picking station, which is equivalent to enlarging the number of orders processed by the picking station at the same time. Thus, the worker or picking device of the picking station may complete more picking operations through a continuous picking operation, so that accumulation of picking tasks in some workstations is avoided, distribution of the orders in each workstation is dynamically adjusted according to a task load of each workstation, thereby realizing dynamic load balancing, ensuring an flexible operation sequence of priority orders, and improving the picking efficiency of items and the completion efficiency of orders.

Preferably, the system for warehousing operation further includes a shelf 14 configured to store a box containing the item, and a forklift 15 configured to take the box in which the item required for an order is stored from the shelf 14 to enable the worker or the picking device to pick the item in the box. The forklift 15 is communicatively connected to the receiving device 12 to carry corresponding boxes according to the order information, the forklift 15 is used to take the box in which the item required for the order is located from the shelf 14, so that the worker or the picking device picks the item in the box. The allocating device 12 is used to allocate the item picked by the worker or the picking device to the order box corresponding to the item, or the order box is carried to transport the item picked by the worker or the picking device. That is, different operations are disassembled and completed with different trolleys, so that the function needs to be realized by each trolley is simpler, thus resulting in a simpler structure, a lower equipment cost, and an improved system robustness. Meanwhile, compared with the existing technology in which a single trolley is used to simultaneously implement taking of the box from the shelf 14 and order allocation, the allocating device 12 in this embodiment does not need to take the box from the shelf 14, so that the center of gravity is lower, thus a traveling speed of the allocating device 12 may be adjusted faster and the carrying efficiency is higher, so that not too many allocating devices 12 are required, thereby reducing the number of required trolleys and the cost.

As shown in FIG. 31, in this embodiment, the shelf 14 includes a box storage device 141 and a box temporary placing device 142 located below the box storage device 141, and the forklift 15 is configured to take the box in which the item required for the order is stored from the box storage device 141 and place the box on the box temporary placing device 142. The box temporary placing device 142 includes a plurality of mutually parallel forks and a support structure supporting the forks.

It should be noted that the system for warehousing operation may further include a box carrying trolley 16 configured to carry the box in which the item required for the order is stored on the box temporary placing device 142. The forklift 15 is used to take the box in which the item required by the order is stored from the box storage device 141 at the upper layer of the shelf 14 and place the box on the box temporary placing device 142 at the bottom layer of the shelf 14, and the box carrying trolley 16 is used to take the box in which the item required by the order is stored on the box temporary placing device 142. That is, an operation of the box to the picking station is further disassembled, and is separately performed using the forklift 15 and the box carrying trolley 16, so that the function needs to be realized by each trolley is simpler, thus resulting in a simpler structure, a lower equipment cost, and an improved system robustness. Meanwhile, compared with the existing technology in which a single trolley is used to implement the taking of the box and the carrying of the box to the picking station, the box carrying trolley 16 in this embodiment does not need to take the box from the shelf 14, so that the center of gravity is lower, thus a traveling speed of the box carrying trolley 16 may be adjusted faster and the carrying efficiency is higher, so that not too many box carrying trolleys 16 are required, thereby reducing the number of required trolleys and the cost.

It should be understood that the box temporary placing device 142 may also be provided in other positions, for example, the box temporary placing device 142 is provided separately around the picking station and adjacent to the prompting device 11. At this time, the box carrying trolley 16 is not required, which is not limited herein.

Specifically, the system for warehousing operation further includes a box temporary storage device 17 configured to temporarily store the box. The box carrying trolley 16 is configured to carry the box from the box temporary placing device 142 to the box temporary storage device 17 or to a position adjacent to the prompting device 11 according to a picking priority of the item in the box. If the box needs to be picked immediately, the box carrying trolley 16 will directly carry the box to the corresponding picking station. If the box does not need to be picked immediately, the box carrying trolley 16 will carry the box and place the box on the box temporary storage device 17 in a box temporary storage area. After a condition that the box needs to be picked is triggered, the box carrying trolley 16 will carry the box to the corresponding picking station.

That is, items stored in the warehouse are all stored in containers such as those boxes placed on the fixed shelves 14 of which the placement is similar to a conventional manual warehouse. The picking of the entire warehouse is in an item-to-person mode, two different robots (i.e., the forklift 15 and the box carrying trolley 16) that are responsible for carrying the boxes to the picking station are provided, and the system prompts the workers to pick. Orders of which the picking is completed are automatically pushed by the robot to a quality inspection and packaging area.

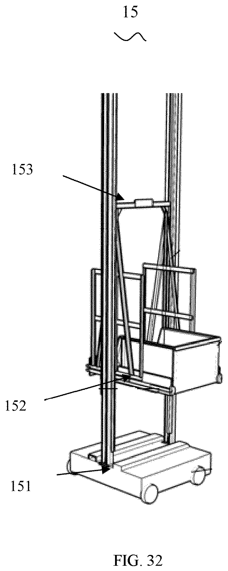

As shown in FIG. 32, specifically, the forklift 15 may include a movable chassis 151, a lift device 152 disposed on the movable chassis 151, and a fork device 153 disposed on the lift device 152. The fork device 153 includes a chute retractable in a direction perpendicular to a lift direction of the lift device 152, and a stopper disposed on the chute. The chassis 151 is responsible for the movement of the forklift in the warehouse. A navigation mode includes, but is not limited to, a plurality of navigation or hybrid navigation modes such as laser, two-dimensional code, vision, magnetic strip, track, etc. The lift device 152 is responsible for the lifting of the fork device 153, and the fork device 153 is responsible for taking the box from or placing the box on the box temporary placing device 142 or the box storage device 141.

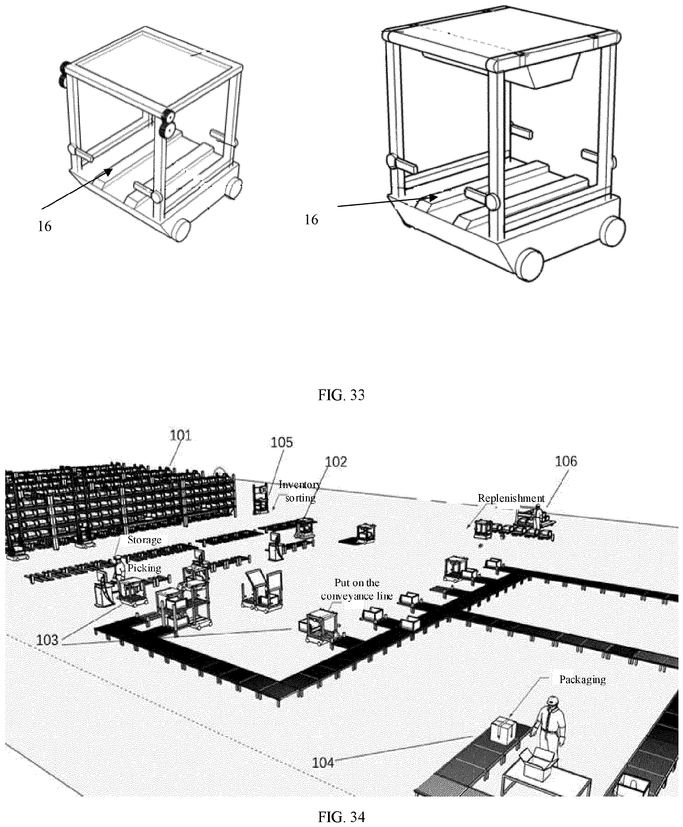

FIG. 33 is a schematic diagram of a box carrying trolley 16. This diagram shows structural designs of two possible box carrying trolleys 16. The box carrying trolley 16 has various functions such as picking and placing of the box, carrying of the box, etc. The structure of the box carrying trolley 16 includes a movable chassis, a box placing device, a box limiting device and an item allocating device. The movable chassis is mainly responsible for the motion of the box carrying trolley 16. The navigation mode includes, but is not limited to, a plurality of navigation or hybrid navigation modes such as laser, two-dimensional code, vision, magnetic stripe, track, etc. During carrying of the box, the box is placed on the box placing device. The box limiting device has various uses, including taking and placing the box, preventing the box from shaking during the movement, pushing the box out of the box temporary storage device, etc. The item allocating device is mainly configured to carry the items and allocate the items to a corresponding order box. The allocating device may be a flap or a belt with power.

For ease of understanding, examples are given below.

FIG. 34 is a layout of an interior of a warehouse in an embodiment of the present disclosure. The entire warehouse is divided into several different functional areas which include a fixed shelf storage area 101, a box temporary storage area 102, a picking and allocating area 103, and a quality inspection-packaging-outbound area 104. The fixed shelf storage area 101 is mainly responsible for long-term storage of items. The box temporary storage area 102 is mainly responsible for temporary storage of the box to be picked. The picking and allocating area 103 is mainly responsible for picking and allocating orders; The quality inspection and packaging outbound area 104 is mainly responsible for quality inspection, packing and outbound of the orders. In addition, based on operation requirements of the warehouse, a replenishment station 106 and an inventory counting station 105 may be set in the warehouse to be responsible for the replenishment and inventory counting in the warehouse respectively.

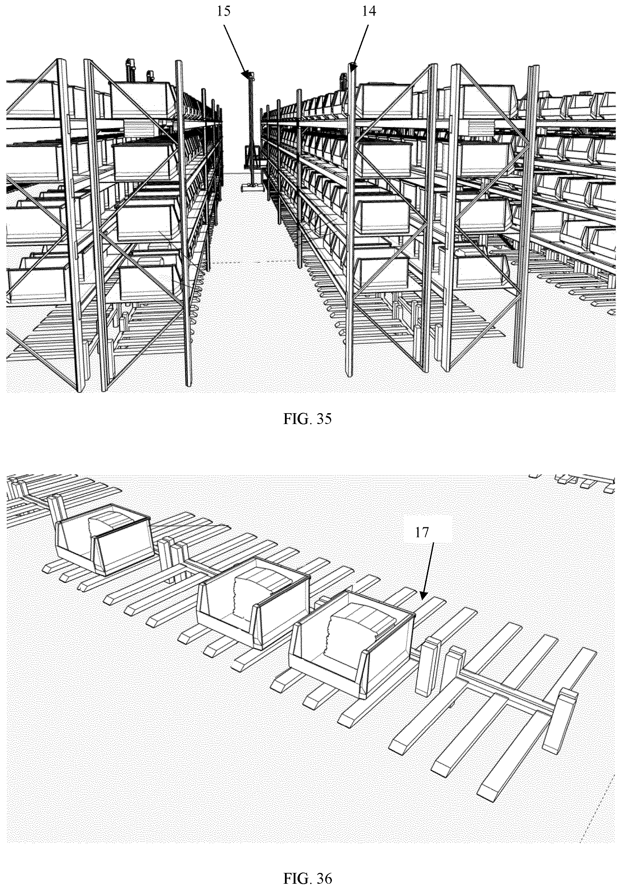

FIG. 35 shows details of an interior of the fixed shelf storage area 101. The fixed shelves 14 may be placed in this area and may have variously different forms of placement, and FIG. 6 shows a back-to-back manner of two rows of shelves 14. Each shelf 14 may have a plurality of storage places, i.e., box storage devices 141, on which one or more boxes may be placed. The bottom layer of the shelf is a box temporary placing device 142 for placing the boxes. One or more forklifts 15 may be arranged in this area, the function of the forklifts 15 is to take the boxes from the upper layers of the shelf 14 and place the boxes on the box temporary placing device 142 on the first layer (i.e., the bottom layer), or to take the boxes from the box temporary placing device 142 and place the boxes on the storage spaces on the upper layers of the shelf 14. The forklifts 15 may move in a lane between the shelves 14, or may move outside a shelf 14 and next to a different shelf 14.

FIG. 36 shows details of an interior of the box temporary storage area 102. One or more box temporary storage devices 17 may be arranged in this area. These box temporary storage devices 301 may be the same as or be different from the box temporary placing devices 142 in the fixed shelf area. The boxes may be stored on the box temporary storage device 17, and different items may be stored in the boxes. The items stored in this area are mainly used for order picking. The item that is expected to be not required for the order for a long time in the future may not be placed in this area, thus facilitating quick turnover of the items to be picked.

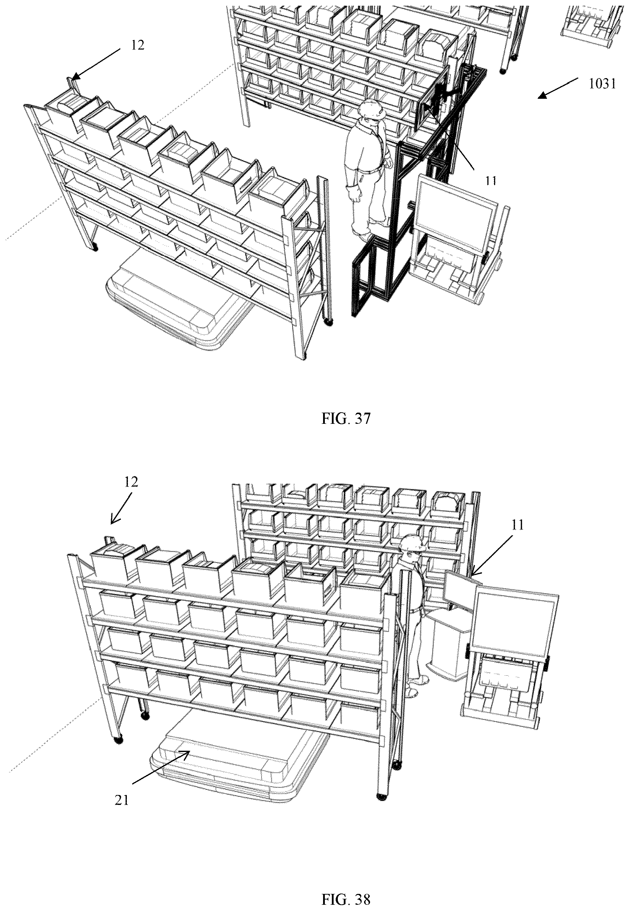

FIG. 37 shows the picking and allocating area 103. One or more picking stations 1031 may be arranged in this area, which are equipped with devices such as PC/PTL to assist the picking of workers. Next to the picking station 1031, there may be one or more box temporary storage devices 17 configured to store the box to be picked in the picking station 1031. In the picking process, an allocating device 12 may park next to the picking station 1031, the picking worker picks out an item from a corresponding box and places the item on the allocating device 12. When a part or all of picking tasks of the orders corresponding to the box on the allocating device 12 is completed at the picking station, a shelf carrying trolley may be used to carry the allocating device 12 to a next picking station or the quality inspection-packaging-outbound area 104. The order box may be stored on the fixed order box temporary storage device or on the allocating device 12. After the order picking is completed, the item is conveyed out of this area by the conveyance device to the quality inspection-packaging-outbound area 104.

Specifically, the picking station may include an allocating wall fixed disposed, a movable allocating wall, or a conveyance line capable of carrying the order box. The allocating wall may be similar to a shelf having one or more order box placement positions, or may be other devices capable of placing the order boxes. Each order placement position is identified by a number, or has a corresponding prompting device configured to prompt the picking worker or automatic picking device. When the order box is placed at a corresponding position, the system records a binding relationship between the order box and the corresponding position. When the picking worker or automatic picking device picks the corresponding item from the container of the allocating device 12, allocating prompt information is sent to the picking worker or the automatic device to put the item into the order box at the corresponding position. In this way, items inbound and picked by a single workstation meet multiple orders at the same time, thereby improving the picking efficiency and reducing an error rate of the picking worker.

The communication device 121 may include a display screen, any one or a combination of a plurality of lighting devices provided in one-to-one correspondence information with a plurality of order boxes, of course, may also include a light guiding device on the workstation or the like.

FIG. 38 is a schematic diagram of the movable allocating wall beside the picking station being carried by an automated guided vehicle (AGV). The system for warehousing operation may further include a shelf carrying trolley 21. The shelf carrying trolley 21 includes a movement mechanism, and a lifting mechanism disposed on the movement mechanism. The lifting mechanism is configured to lift a bottom of the movable allocation wall to carry the movable allocation wall. A carrying process of the shelf carrying trolley 21 is specifically as follows. First, the lifting mechanism is lowered to move the shelf carrying trolley 21 to the bottom of the movable allocating wall, then, the lifting mechanism is raised to lift the movable allocating wall, and after the shelf carrying trolley 21 carries the movable allocating wall to the destination, the lifting mechanism is lowered to put the movable allocating wall down and drives away.

Specifically, after the picking of orders on one side of the movable allocating wall is completed or when other order allocating walls need to be inserted into this picking station for operation, the AGV may be dispatched to carry the movable allocating wall to other workstations or temporary storage areas, and other order allocating walls and orders that need to come to the workstation for the sorting station are transported to the station for sorting, which improves the utilization rate and personnel efficiency of the workstation.

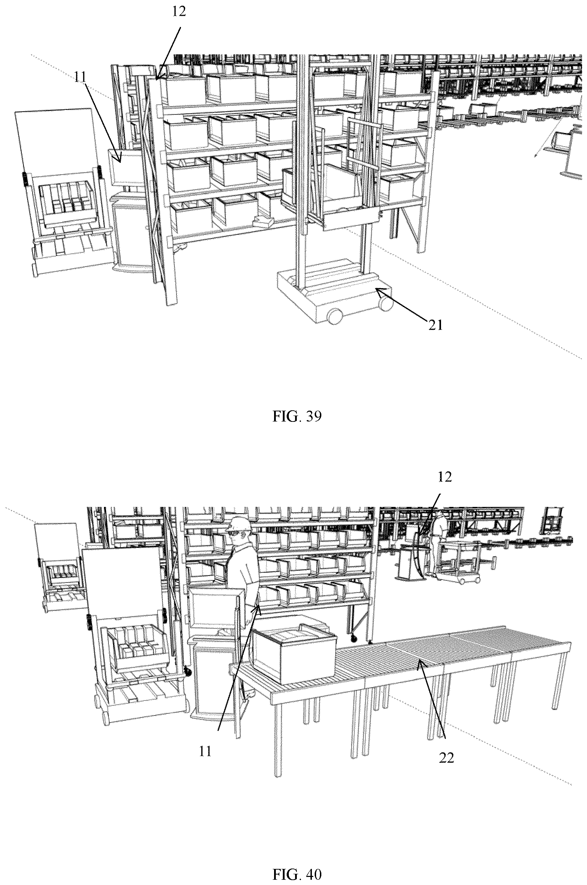

FIG. 39 is a schematic diagram of the forklift 15 taking and carrying the order box on the allocating wall of the picking station. When the picking of some order boxes on the fixed allocating wall or movable allocating wall is completed at the station or other order boxes need to be inserted into the picking station for operation, the forklift 15 is dispatched to carry the order boxes to other workstations or temporary storage positions.

FIG. 40 is a schematic diagram of a conveyance line beside the picking station carrying the order box. The system for warehousing operation further includes a conveyance line 22 configured to convey the order boxes taken from the allocating device and of which the picking in this station is completed.

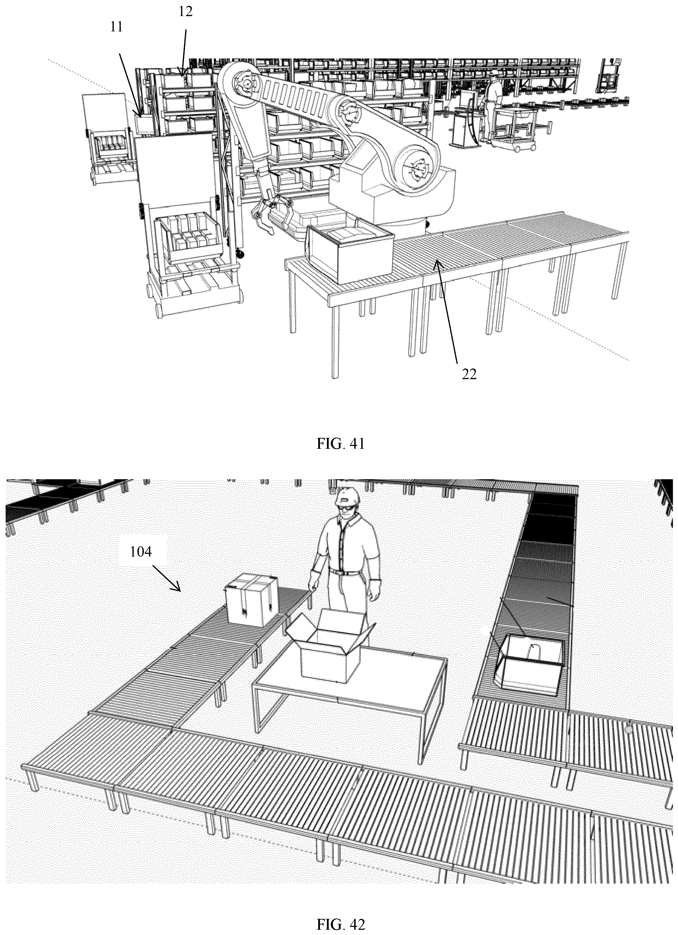

FIG. 41 is a schematic diagram of the picking station using a robot as an automatic allocating device for item picking and allocating.

The order picking process in the system of the present disclosure is efficient for the picking workers and has a low error rate. All box carrying, order box carrying, and order allocating are operations, which significantly reduce the demand for warehouse personnel. For different order structures, sequences of the boxes and the order boxes entering the picking station may be planned through algorithm optimization, so that the picking efficiency is maximized and the waiting time as well as invalid box carrying of the picking workers are reduced.

FIG. 42 shows the quality inspection-packaging-outbound area 104. One or more quality inspection and packaging stations may be arranged in this area, and quality inspection and packaging workers complete quality inspection and packaging operations at the quality inspection and packaging station. The order box and items in the order box are conveyed by the conveyance device from upstream to the quality inspection and packaging station, and then the quality inspection and packaging worker takes the items in the order out of the order box, performs quality inspection on the items, puts the items into an order package box, and then packages the order package box. The packaged order packages are conveyed outbound or to an outbound temporary storage area through the conveyance device. After the quality inspection and packaging operation is completed, an empty order box is conveyed back to the picking and allocating area through another conveyance device to become a new order box.

Compared with the existing technology, in the embodiments of the present disclosure, prompts are provided for the picking and allocating during manual operations. No judgment needs to be made on the picked items nor on the orders for item allocating. In this way, invalid operations of the workers are reduced, and the working efficiency of the workers is greatly improved. Meanwhile, in the system, each of the forklift 15 and the shelf carrying trolley 12 performs their own duties, i.e., they only do the work they are best at, so that a use rate of each kind of robot is higher, the robustness of the entire system is higher, and the cost is lower. And the design of the system is highly flexible, so that deployment cost of the entire system is low, reconstruction of the warehouse is small, and software level optimization is adopted to adapt to changes of the service. In the case of a large-scale order peak, orders are processed manually and collaboratively, so that the entire system has great peak elasticity. In addition, in the present disclosure, the system effectively processes a variety of different order structures such as high-time-limit orders, hot-item order, and the like through algorithm optimization.

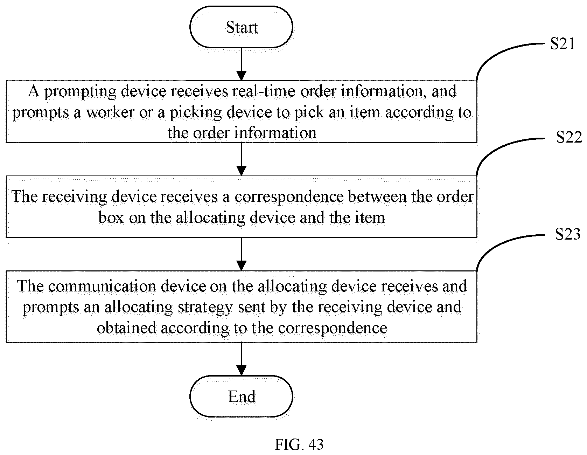

An embodiment of the present disclosure relates to a method for warehousing operation, as shown in FIG. 43, which includes the following operations.

In S21, a prompting device receives real-time order information and prompts a worker or a picking device to pick an item according to the order information.

Specifically, the prompting device 11 may be provided at the picking station, the worker or the picking device performs the picking of items required for the order according to the order information displayed on the prompting device 11, or the prompting device 11 sends the order information to an automatic picking device such as a robot, so that the automatic picking device performs the picking of the items required for the order according to the received order information.

Preferably, the prompting device 11 preferentially receives order information of orders containing the same item, so that it is possible to ensure that items contained in a larger number of orders can be picked from the box carried one time, thereby improving the efficiency of picking items.

In fact, before binding the order box with the specified position of the specified allocating device according to the order information, the method further includes: assigning the shelf carrying trolley 21 or the worker to carry the allocating device containing an empty order box to a workstation according to work scheduling information of the workstation; alternatively, assigning the forklift to take the empty order box from a temporary storage device for storing empty order boxes and an empty order box injection port, and to place the empty order box at an order box placement position of the order box allocating device of the workstation; alternatively, dispatching the conveyance line to convey the order box to the workstation, thereby enabling the empty order box to be carried to the picking station.

In addition, before allocating the item picked by the worker or the picking device to corresponding order box on the allocating device, the method further includes: binding an order with the order box according to the order information; and binding the order box with a specified position of a specified allocating device according to the order information.

In S22, the receiving device receives correspondence information between the order box on the allocating device and the item.

The receiving device 13 may be a server or a local processor configured to receive the correspondence information between each of the plurality of allocating devices 12 and the item on each of the plurality of allocating devices 12. Specifically, the receiving device 13 receives a box ID, the number of the items placed in the box, a storage address of the box, and a picking record of the worker or the picking device, thus the correspondence information between the allocating device 12 and the items on the allocating device 12 is obtained, thereby facilitating subsequent control of the allocating device 12 to carry the items required for the order to a corresponding packing area. The correspondence information between the order box and the item includes an item attribute (including a type, model, quantity, etc.) in each box on the current allocating device 12.

In S23, the communication device on the allocating device receives and prompts an allocating strategy sent by the receiving device and obtained according to the correspondence information.

Specifically, the communication device 121 is communicatively connected to the receiving device 13, to acquire the allocating strategy sent by the receiving device 13 and obtained according to the correspondence information, and the allocating device 12 prompts the box on the allocating device 12 the area where each box needs to go to and the operation (e.g., packing or continuing to add items) which each box needs to perform in the next step according to the allocating policy. The allocating device may be any one or a combination of an order allocating wall fixedly disposed, a movable allocating wall, a conveyance line capable of conveying the order box.

In the actual application, the method further includes: in response to the picking of the order on the order box allocating device being completed at the workstation, dispatching the shelf carrying trolley 21 to carry the movable allocation wall to other workstations or temporary storage areas; alternatively, prompting the worker to carry the movable allocation wall to other workstations and temporary storage areas; alternatively, dispatching a forklift to take an order box to be carried from the allocating device and carrying the order box to be carried through the forklift; alternatively, dispatching the forklift to take the order box to be carried from the allocating device and carrying the order box through the conveyance line.

Alternatively, before the operation S21, the method may further include taking, by the forklift 15, the box in which the item required for an order is stored from the shelf 14 to enable the worker or the picking device to pick the item in the box.

Furthermore, the forklift taking the box in which the item required for the order is stored from the shelf 14 to enable the worker or the picking device to pick the item in the box further includes the following operations. That is, the forklift 15 takes the box in which the item required for the order is stored from the box storage device 141 at the upper layer of the shelf 14 and places the box on the box temporary placing device 142 at the bottom layer of the shelf 14. After the forklift 15 takes the box in which the item required for the order is stored from the shelf 14 to enable the worker or the picking device to pick the item in the box, the method further includes the following operations. That is, a box carrying trolley 16 carries the box in which the item required for the order is stored on the box temporary placing device 142.

It should be noted that, before the plurality of allocating devices 12 allocate the items picked by the worker or the picking device to the order boxes corresponding to the items, or carry the items picked by the worker or the picking device through the order boxes respectively carried by the plurality of allocating devices, the method further includes the following operations. That is, the allocating device 12 acquires an empty order box from an order box injection port, bands the order with the empty order box according to the order information, and determines whether the item required by the bound order exists in a picking station where the prompting device 11 is located. In response to the item required by the bound order existing in the picking station where the prompting device 11 is located, the allocating device 12 is drive to move to the picking station. In response to the item required by the bound order not existing in the picking station where the prompting device is located, the allocating device 12 places the empty bound order box on an order temporary storage shelf, and takes another order box from the order box injection port. Since the order cannot be picked immediately when there is no item required for the bound order in the picking station, at this time, that the allocating device 12 places the empty bound order box on the order temporary storage shelf and takes another order box from the order box injection port avoid a problem of low efficiency caused by waiting for the picking of the order.

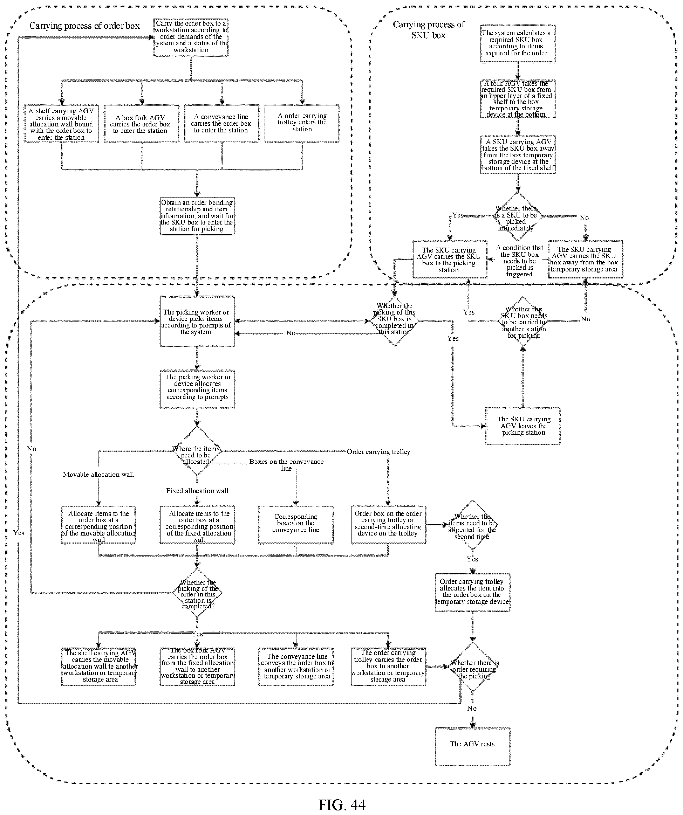

FIG. 44 shows an order picking process for the system in the present disclosure. The order picking process may be divided into three processes: 1. a box carrying process; 2. an order box carrying process; 3.a picking process. The box carrying process describes the process that the box to be picked is carried to the picking station in the system. The order box carrying process describes the process that the order box or the carrying trolley is carried to the picking station in the system. The picking process describes the process of the picking of orders and subsequent order allocating.

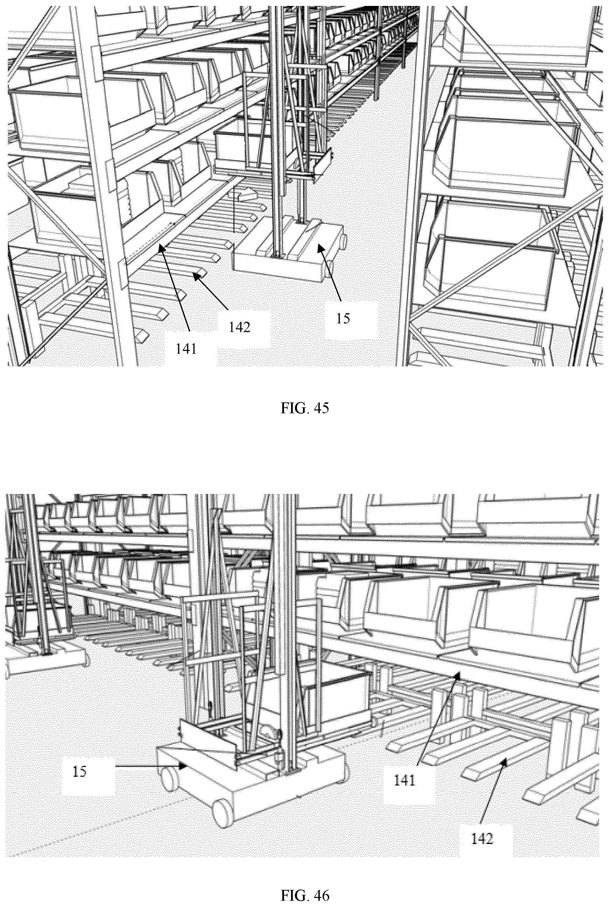

FIG. 45 shows a schematic diagram of a process in which the forklift 15 takes a box from a storage place of the fixed shelf 14. The forklift 15 is driven to a storage place corresponding to the box according to a command of the system, and the fork device is adjusted to a height corresponding to the storage place by the lifting device, and then the box is taken out of the storage place. In a process of the forklift 15 moving without carrying any box, the height of the fork device may be adjusted in advance by the lifting device.

FIG. 46 shows a schematic diagram of a process in which the forklift 15 places the box at the bottom layer of the fixed shelf area 14. As shown in FIG. 12, after the forklift 15 takes the box from the upper layer of the fixed shelf 14, the box is placed on the bottom layer of the box temporary placing device 142. After taking the box, the forklift 15 adjusts the height of the fork device to the bottom layer of the box temporary placing device 142 by the lifting device, and then places the box on the box temporary placing device 142 by the fork device. In the case where the forklift 15 is loaded (i.e., there is a box in the fork device), the chassis of the forklift remains stationary during the lifting device adjusting the height of the fork device, which prevents the forklift from shaking due to height adjustment during moving. This kind of limitation does not significantly reduce the efficiency of the forklift 15 because in most cases the forklift 15 does not move too far when placing the box.

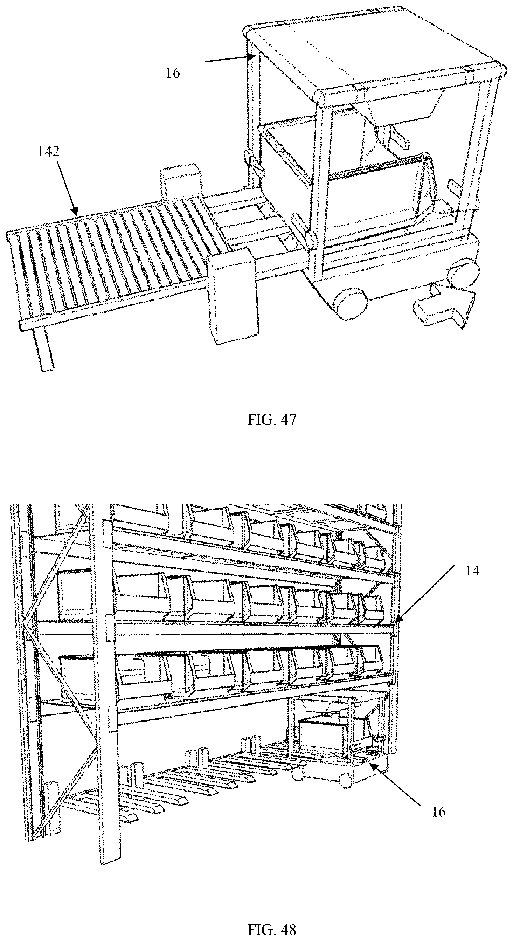

FIG. 47 shows a schematic diagram of the process in which the box carrying trolley 16 takes the box from the box temporary placing device 142. The box is originally placed on the box temporary placing device 142. The box carrying trolley 16 first sets the limiting device to a non-limiting state and moves to a place under the box temporary placing device 142, and then sets the limiting device to a limiting state and moves outward during which the box is brought down from the box temporary placing device 142 and placed on a box placement device of the box carrying trolley 16. A power mechanism used in the process of taking the box only includes the limiting device, so the whole process has high robustness and is not prone to failure. A reverse process of the process of taking the box can realize a process of the box carrying trolley 16 placing the box on the box storage device 141, and details are not described herein.

FIG. 48 shows a schematic diagram of the box carrying trolley 16 taking the box from and placing the box in a fixed shelf area. The specific process is similar to that in FIG. 47, thus details are not described herein.

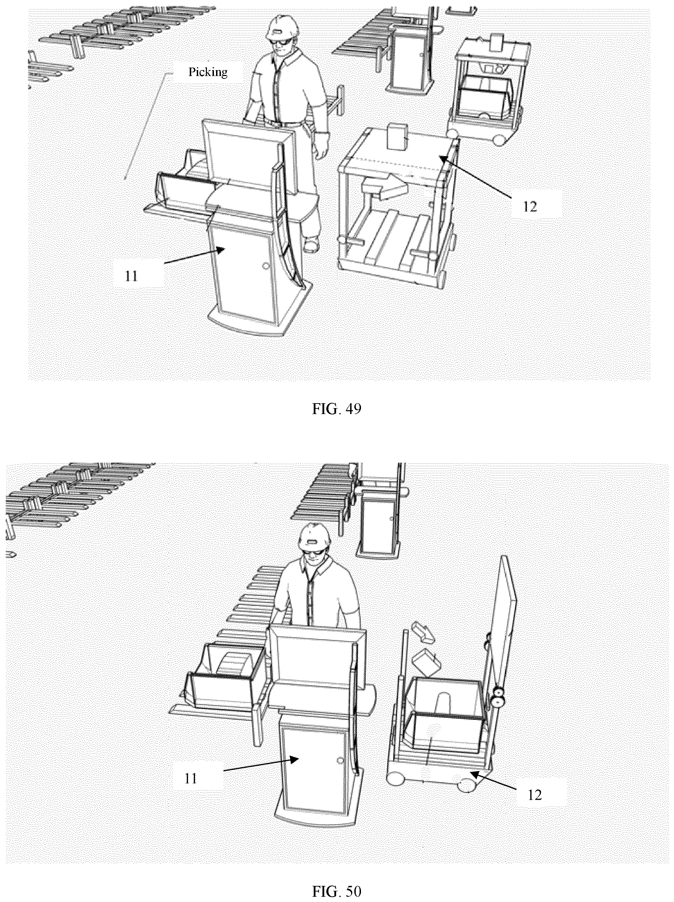

FIGs. 49 and 50 show picking processes of the worker in the picking station. In practical application, a specific structure of the allocating device 12 may not be limited. Here, taking the allocating device 12 being a carrying trolley having the same structure as the box carrying trolley 16 as an example. FIG. 49 shows that the picking worker allocates items into an item allocating device on the carrying trolley after the picking of the items is completed. FIG. 50 shows that the picking worker allocates the items into the order box carried by the carrying trolley.

FIG. 49 shows a flow of picking and allocating of the worker in the picking station. The box has previously been carried and placed by the carrying trolley on the box storage device 141 at the picking station before the picking. The picking worker picks the corresponding number of items from the box according to the prompting device 11, and then places the items on the item allocating device of the carrying trolley. Then, the carrying trolley leaves the picking station, moves to the corresponding order box, and allocates the items to the corresponding order box. If the items stored in this box is no longer needed after the picking operation is completed, another carrying trolley is going to move this box away from the picking station. In this picking process, the picking workers do not have to judge the picked items and orders for allocating, so that the picking efficiency is greatly improved.

Figure 50 also shows a flow of picking and allocating of the worker in the picking station. Unlike FIG. 49, in this case, the carrying trolley carries the order box to the picking station. Therefore, after picking the items, the picking worker will allocate the items directly into the order box carried by the carrying trolley. In the allocating process of the worker, the item allocating device of the carrying trolley is opened to facilitate the worker to allocate the items into the item allocating device.

In an actual picking process, both allocating modes of FIGs. 49 and 50 may exist, or only one of the allocating modes of FIGs. 49 and 50 may be used. When a certain order box can be carried to the picking station in a short time, the mode in FIG. 50 is preferred. However, in the case where the order box cannot be carried to the picking station in a short time, the mode in FIG. 49 is preferred. Therefore, it is not needed to wait for both corresponding boxes and order boxes to arrive the picking station in the order picking and allocating process, so that the waiting time of the picking workers is greatly reduced and the picking efficiency is improved.

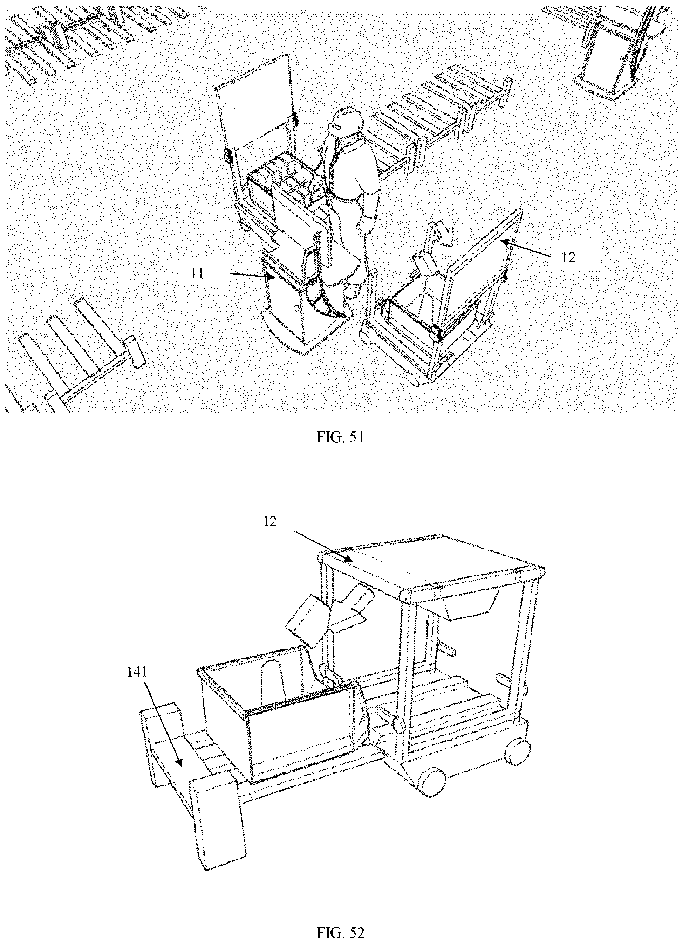

FIG. 51 shows another mode of picking at the picking station. In this mode, the box is directly carried by the carrying trolley to the picking station without placing the box on the box storage device 141 of the picking station. The picking worker picks items directly from the corresponding box carried by the carrying trolley and allocating the items. During this picking process, the item allocating device of the carrying trolley may be opened to facilitate the picking worker's operation. After the picking is completed, the carrying trolley moves the box away from this picking station if the items in this box is no longer required by this picking station. This picking mode is suitable for picking boxes with low demand, which saves the time of box placement and removal.

If the items are placed on that item allocating device of the carrying trolley after the picking operation at the picking station, the carrying trolley needs to allocate the items into the corresponding order box.

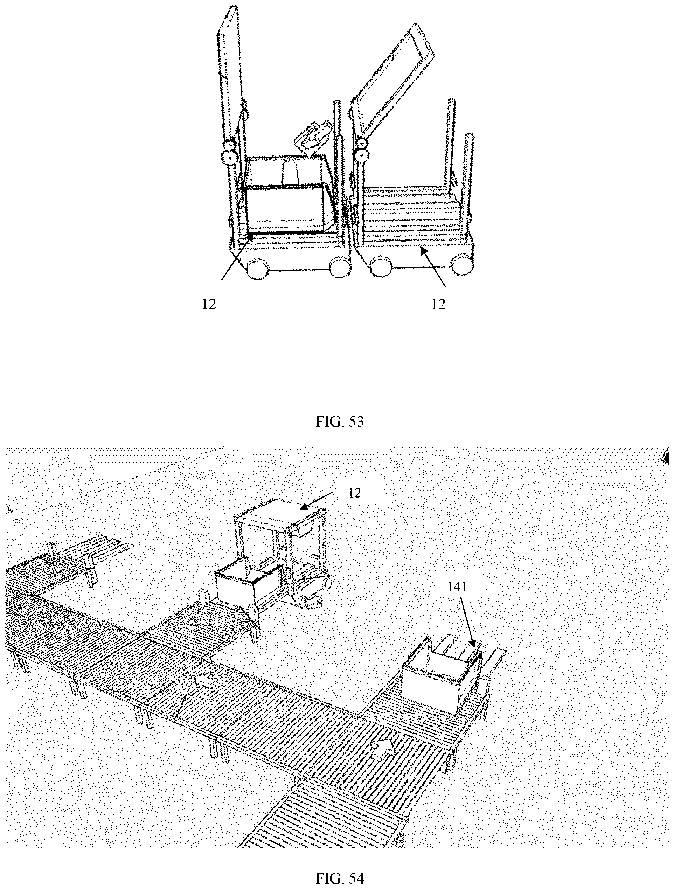

FIGs. 52 and 53 show two modes of automatically allocating of the carrying trolley.

FIG. 52 shows one mode of the carrying trolley allocating items into the order box. In this mode, the order box has been previously placed on the box storage device 141, the carrying trolley carries an item to be allocated to the vicinity of the order box, then the item allocating device is activated to allocate the item into the order box, and the carrying trolley then leaves this order box area.

FIG. 53 shows another allocating mode of dynamically moving. In this mode, the order box is placed on the carrying trolley instead of on the box storage device 141. The system dispatches the carrying trolley carrying the item and the carrying trolley carrying the order box to meet at a place in the station, and the item allocating device of the carrying trolley carrying the order box may be opened to facilitate the carrying trolley carrying the item to activate the item allocating device and allocate the item into the corresponding order box. When this allocating operation is completed, these two carrying trolleys move away from this place to continue subsequent operations.

The following describes an order box carrying process.

The order box carrying process is similar to that in FIG. 47, and thus will not be repeated herein.

FIG. 54 shows a process of entering a new empty order box. An empty order box is transported from the quality inspection-packaging-outbound area to the picking and allocating area by a conveying device and the empty order box is placed on the box storage device 141 at an entrance of the empty order box. The system dispatches the carrying trolley to the entrance of the empty order box, and takes the order box for subsequent picking and allocating operations.

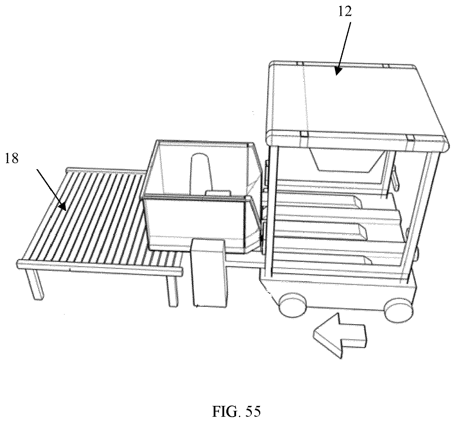

FIG. 55 shows a schematic diagram of the order box of which the picking is completed being pushed to the conveying device 18. After the picking and allocating operation of the order corresponding to the order box is completed, the system dispatches the carrying trolley to the vicinity of the box storage device 141 where the order box is placed, and then the carrying trolley sets the limiting device in the limiting state and moves to the inside of the box storage device 141. The limiting device thus is in contact with the order box and pushes the order box onto the conveying device 18. The conveying device 18 then conveys the order box to the quality inspection-packaging-outbound area.

The order picking process may refer to FIG. 37 to FIG. 41, and thus details are not repeated herein.

In addition to order picking, operations of the warehouse replenishment, inventory counting, retuning and placing the item on the shelf, inventory sorting and other aspects have also been intelligently upgraded.

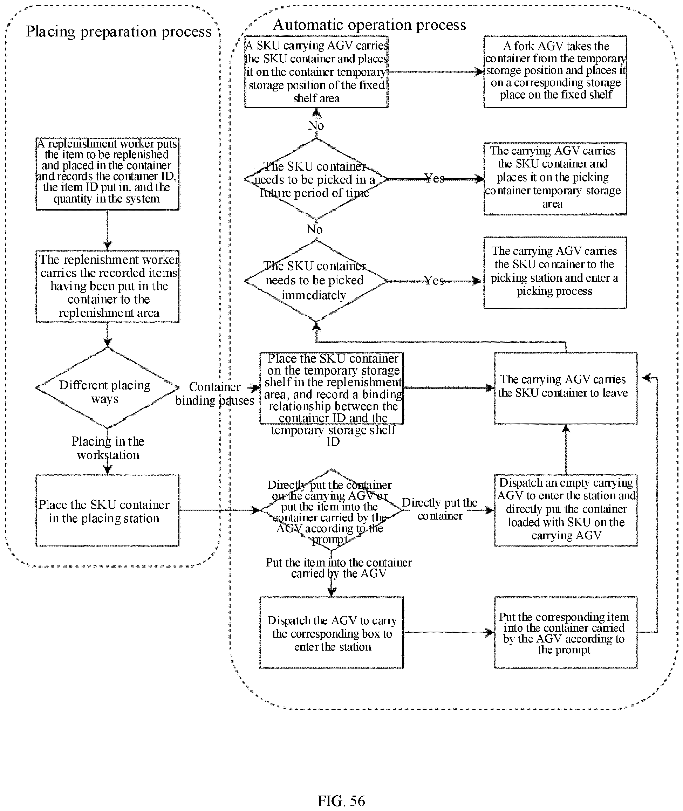

FIG. 56 is a flowchart of replenishment in the system of the present disclosure. This replenishment process is divided into a replenishment preparation section and an operation section. In a process of the replenishment preparation section, a replenishment worker first puts the items to be replenished into the box, and records the item ID, the quantity to be put in, and the container ID to be put in through the equipment such as PC and RF. This operation may be done on any place. The replenishment worker then carries the containers in which the items have been put to a replenishment area, then places the containers one by one on the box storage device 141 in the replenishment area, and records a binding relationship between container IDs and temporary storage device IDs through equipment such as PCs (i.e., computers), RFs (i.e., handheld terminal devices), and the like. These containers in which the items have been put may also be carried to a replenishment and placing station. After receiving a task of replenishing and placing, the system activates an operation flow, and dispatches the carrying trolley to carry these containers to be put on the shelf. The system determines carrying and storage destinations of these containers based on placing modes, locations, and picking priorities of the items. For the container on the storage device 141 in the replenishment area, the AGV is dispatched to carry the container. For replenishment items in the replenishment and placing station, the system decides whether to replenish and place the whole container or replenish and place the items in the container into the corresponding container according to corresponding placing strategies. If the whole container is replenished and placed on the shelf, the system dispatches the AGV to carry the container, directly places the whole container on the AGV after the AGV arrives at the station, and records the binding relationship between the container and the AGV. If the items are replenished and placed into the corresponding container, the AGV is dispatched to carry the corresponding container from the temporary storage area to enter the station, and then puts the items into the corresponding container according to the prompts. After that, the system dispatches the AGV to move the stock keeping unit (SKU) container away. For the boxes to be picked immediately, the carrying trolley directly carries these boxes to the picking station for picking. For boxes for which the system determines need to be picked in a future period of time, the carrying trolley carries and place these boxes on the box storage device 141 in the box temporary storage area. For boxes for which the system determines do not need to be picked for a long period of time, the carrying trolley carries these boxes to the area where the fixed shelf 14 is, and then the forklift 15 places these boxes on the storage places of the fixed shelf 14 for storing.

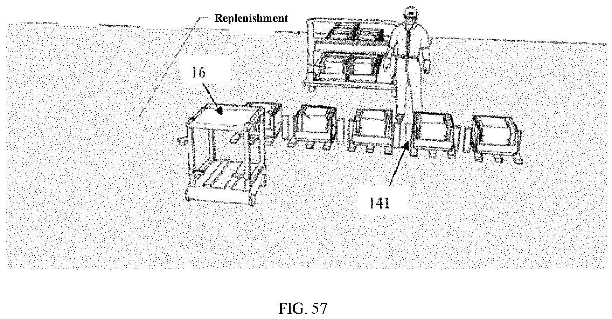

FIG. 57 is a schematic diagram of an operation in the replenishment area. The replenishment worker carries the box stored with the items to be replenished to the replenishment area. This carrying process is not scheduled by this system, and may be carried by trolleys, forklifts, conveying devices and other conveying devices as shown in the figures. The replenishment worker then places the box to be replenished on the box storage device 141 in the replenishment area and records the binding relationship. The system dispatches the box carrying trolley 16 to carry the boxes and store the boxes in corresponding storage places.

In this replenishment process, the manual operation is mainly to put the items into the box, and this operation may be decoupled from other processes of replenishment and picking, so the efficiency of the manual operation is high. After the box is manually placed on the box storage device 141 in the replenishment area, a storage location of the box is completely determined by the system through an algorithm, which reduces manual operations and optimizes the inventory distribution throughout the warehouse.

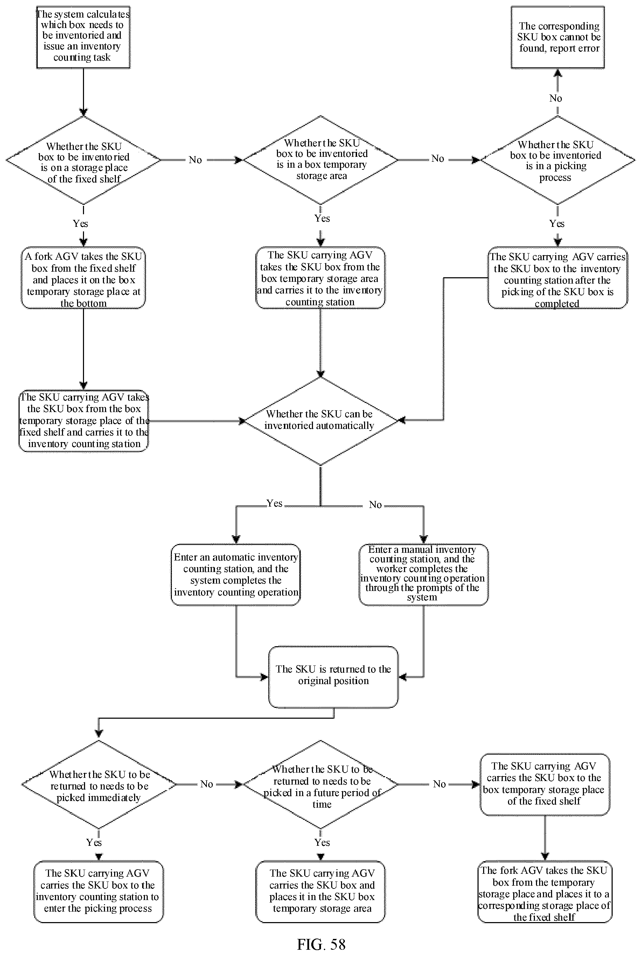

FIG. 58 is a flowchart of inventory counting in the system of the present disclosure. First, the system calculates which boxes need to be inventoried based on recently picked or replenished boxes. Since there are only several operations such as picking and replenishment of the inventory in this system are interacted with human beings, boxes that have not undergone these operations do not need to be inventoried. The system calculates the boxes to be inventoried through the algorithm, considering a sale attribute, physical attribute, inventory depth and other factors. Some of these boxes may be stored on the fixed shelf 14, some may be placed on the box temporary storage positions, and some may be in the picking process. According to these different inventory statuses, the system separately dispatches the forklifts 15 to carry these boxes to the inventory counting station. Some boxes able to be inventoried are carried to an automatic inventorying counting station; Other boxes are carried to a manual inventory counting station for manual inventory counting. After the inventory counting is completed, the system determines a subsequent destination and storage position of the box according to a picking priority of the box. This process is similar to the process of replenishment.

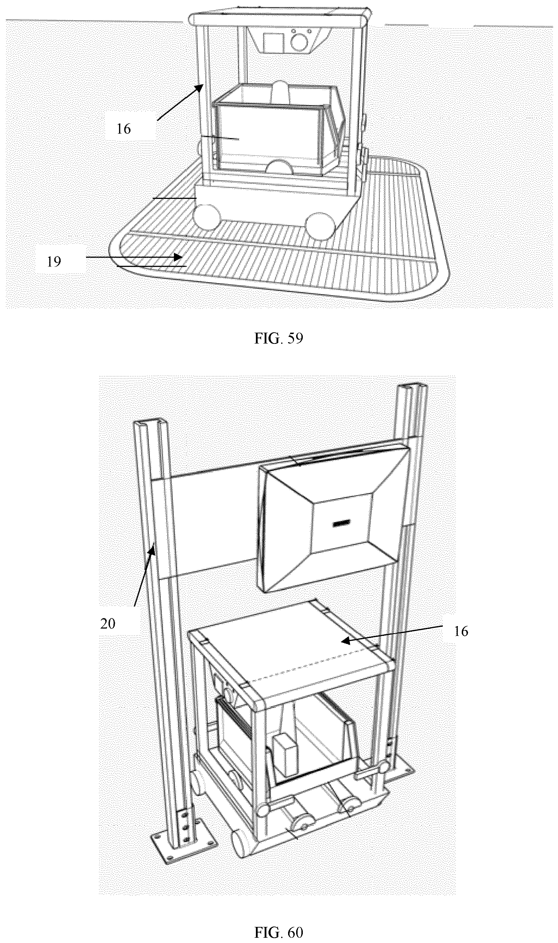

FIGs. 59 and 60 are schematic diagrams of an inventory counting station.

As shown in FIG. 59, the box carrying trolley 16 carries a box to be inventoried onto an automatic weighing device 19. The system records the overall weight, and calculates the number of items in the box according to the weight of the box itself recorded by the system, thereby achieving the purpose of inventory counting. This automatic inventory counting method applies to the inventory counting of items having a large weight gap with other boxes in this warehouse.

As shown in FIG.60, the box carrying trolley 16 carries a box to be inventoried to the underside of a gantry 20 of the automatic inventory counting station. A RFID reader is installed on the gantry to automatically read the quantity of the items in the box and complete the inventory counting operation. This automatic inventory counting operation applies to items installed with RFID.

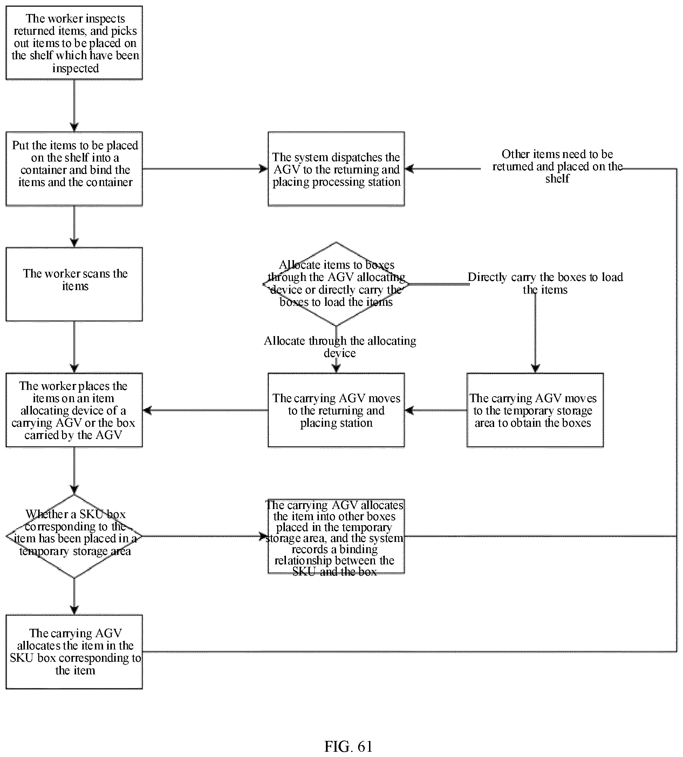

FIG. 61 is a flowchart of returning an item and placing the item on a shelf in the system of the present disclosure. In this process, only a quality inspection of returned items and a scanning operation of the returned items need to be performed manually. The picking, allocating, and placing of the returned items will be completed automatically by the system. First, the returned items are manually inspected, items to be placed on the shelf which have qualified quality are picked out, and then these items are carried to a return processing station. The worker at the return processing station scans the returned items one by one, and the system decides whether to complete the return and placing through the allocating device of the box carrying trolley 16, or to return and place the returned items through carrying the boxes to the station according to the identified returned items and corresponding strategies. In the case of completing the return and placing through the allocating device of the box carrying trolley 16, the system dispatches the carrying trolley to enter the station directly, and the picking worker places the items on the allocating device of the box carrying trolley 16, and the box carrying trolley 16 will allocate the items to the corresponding box. If a box corresponding to the box is already stored in the box temporary storage area, the box carrying trolley 16 directly allocates the items to this box. Otherwise, the box carrying trolley 16 allocates the items into a new empty box, and the system records a box-to-box binding relationship. In the case of returning and placing the returned items through carrying the boxes to the station, the system dispatches the carrying trolley to carry the corresponding SKU box from the temporary storage area to the workstation, and the worker puts the items into the corresponding SKU box. After the returning and allocating operation is completed, the system then dispatches the box carrying trolley 16 to perform the replenishment operation on these boxes.

After operations such as picking, replenishment, returning, etc. are completed, the inventory distribution of some boxes may be fragmented. For example, a box has only 3 items in total, but the 3 items are placed in three different boxes. This kind of inventory defragmentation reduces the capacity utilization of the entire warehouse, so the defragmented inventory may be reorganized through the inventory sorting to improve the capacity utilization of the warehouse.

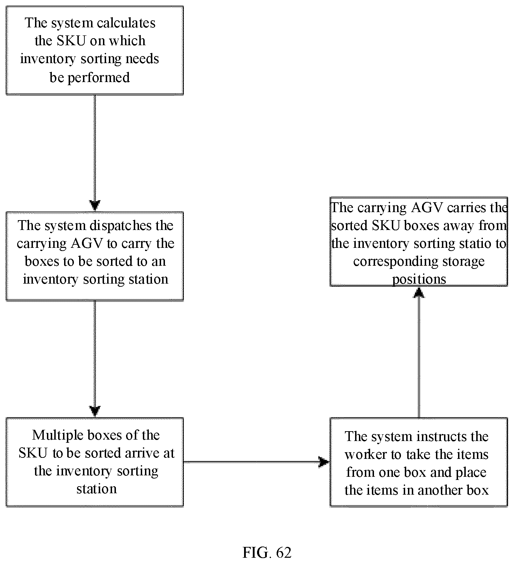

FIG. 62 is a flowchart of inventory sorting in the system of the present disclosure. The system calculates boxes to be sorted according to a real-time inventory status, and dispatches the box carrying trolley 16 to carry the boxes to the corresponding inventory sorting station. When multiple boxes storing the items of a single box arrives at an inventory sorting station, the system instructs the worker to take the items from one box and place the items in another box. In this process, the workers may also be asked to count the quantity and do the inventory counting. When the inventory sorting operation is completed, the system dispatches the box carrying trolley 16 to move the boxes away from the inventory sorting station and to carry the boxes according to the picking priorities of the boxes and store the boxes in corresponding storage positions. After the inventory sorting operation is completed, the empty box may be used as a new box for replenishment. The inventory sorting station may be shared with the inventory counting station or the picking station.

Compared with the existing technology, in the embodiments of the present disclosure, the prompting device 11 receives the real-time order information and prompts the worker or the picking device to pick the item according to the order information. Each prompting device 11 preferentially receives order information of orders containing the same item. The receiving device 13 receives the correspondence information between the allocating device 12 and the item on the allocating device 12. The communication device 121 provided on the allocating device 12 receives the allocating strategy sent by the receiving device 13 and obtained according to the correspondence information. The allocating device 12 allocates the item picked by the worker or the picking device to the order box corresponding to the item, or carry the order box to transport the item picked by the worker or the picking device. That is, after picking the item, the worker or the picking device puts the picked item in the allocating device 12 to enable the allocating device 12 to perform order allocation, so that the order allocation may not be limited by the number of orders able to be stored in an order shelf in the picking station. Therefore, each worker or picking device is able to process a large number of dynamic orders at the same time, so that orders containing the hot item may be distributed to a single picking station as centrally as possible, and the worker or picking device of the picking station may handle the picking of the hot item through a continuous picking operation, thereby avoiding a problem of waiting between different picking stations caused by the orders containing the hot item from being dispersed in multiple picking stations for picking while the shelf 14 where the hot item is located needs to visit each picking station according to a certain order, thus improving the efficiency of picking the items.

For the sake of clarity of description, the operations of the above methods may be combined into one operation or some operations may be split into multiple operations, which are within the protection scope of the present disclosure as long as they include the same logical relationship. Irrelevant modifications or irrelevant designs made to the algorithm or process, but not changing the core design of the algorithm and process are within the protection scope of the present disclosure.

It should be understood that this embodiment is the method embodiment corresponding to the system embodiment, and the technical details in this embodiment may be applicable to the system embodiment. This embodiment can also realize the technical effects similar to those in the system embodiment, and thus details are not repeated herein.

Those of ordinary skill in the art should appreciate that the embodiments described above are specific embodiments of the present disclosure, and that various changes may be made thereto in forms and details in practical application without departing from the spirit and scope of the present disclosure.

## Claims

1. A system for warehousing operation, comprising:
a prompting device, configured to receive real-time order information and prompt a worker or a picking device to pick an item according to the order information;
a plurality of order carrying trolleys, configured to allocate the item picked by the worker or the picking device to an order box corresponding to the item, or carry the order box to transport the item picked by the worker or the picking device; and
a receiving device, configured to receive correspondence information between each of the plurality of order carrying trolleys and an item on each of the plurality of order carrying trolleys;
wherein each of the plurality of order carrying trolleys is provided with a communication device configured to receive an allocating strategy obtained according to the correspondence information.

2. The system for warehousing operation according to claim 1, further comprising:
a shelf, configured to store a box containing the item; and
a forklift, configured to take the box in which the item required for an order is stored from the shelf to enable the worker or the picking device to pick the item in the box.

3. The system for warehousing operation according to claim 2, wherein the shelf comprises a box storage device and a box temporary placing device located below the box storage device, and the forklift is configured to take the box in which the item required for the order is stored from the box storage device and place the box on the box temporary placing device.

4. The system for warehousing operation according to claim 3, further comprising:
a box carrying trolley, configured to carry the box in which the item required for the order is stored on the box temporary placing device.

5. The system for warehousing operation according to claim 4, further comprising:
a box storage device, configured to temporarily store the box, wherein the box carrying trolley is configured to carry the box from the box temporary placing device to the box storage device or to a position adjacent to the prompting device according to a picking priority of the item in the box.

6. The system for warehousing operation according to claim 2, wherein the forklift comprises a movable chassis, a lift device disposed on the movable chassis, and a fork structure disposed on the lift device; and wherein the fork comprises a chute retractable in a direction perpendicular to a lift direction of the lift device, and a stopper disposed on the chute.

7. A method for warehousing operation, comprising:
receiving, by a prompting device, real-time order information and prompting, by the prompting device, a worker or a picking device to pick an item according to the order information;
receiving, by a receiving device, correspondence information between each of a plurality of order carrying trolleys and an item on each of the plurality of order carrying trolleys;
receiving, by a communication device provided on each of the plurality of order carrying trolleys, an allocating strategy sent by the receiving device and obtained according to the correspondence information; and
allocating, by each of the plurality of order carrying trolleys, the item picked by the worker or the picking device to an order box corresponding to the item, or carrying, by each of the plurality of order carrying trolleys, the order box to transport the item picked by the worker or the picking device.

8. The method for warehousing operation according to claim 7, wherein each prompting device preferentially receives order information of orders containing the same item.

9. The method for warehousing operation according to claim 7, wherein before the prompting device receives the real-time order information and prompts the worker or the picking device to pick the item according to the order information, the method further comprises:
taking, by a forklift, a box in which the item required for an order is stored from a shelf to enable the worker or the picking device to pick the item in the box.

10. The method for warehousing operation according to claim 9, wherein taking, by the forklift, the box in which the item required for the order is stored from the shelf to enable the worker or the picking device to pick the item in the box comprises:
taking, by the forklift, the box in which the item required for the order is stored from a box storage device at an upper layer of the shelf and place the box on a box temporary placing device at a bottom layer of the shelf;
wherein after the forklift takes the box in which the item required for the order is stored from the shelf to enable the worker or the picking device to pick the item in the box, the method further comprises:
carrying, by a box carrying trolley, the box in which the item required for the order is stored on the box temporary placing device.

11. The method for warehousing operation according to claim 7, wherein before each of the plurality of order carrying trolleys allocates the item picked by the worker or the picking device to the order box corresponding to the item, or carries the order box to transport the item picked by the worker or the picking device, the method further comprises:
acquiring, by each of the plurality of order carrying trolleys, an empty order box from an order box injection port;
banding the order with the empty order box according to the order information;
determining whether the item required by the order that is bound exists in a picking station where the prompting device is located;
in response to the item required by the order that is bound existing in the picking station where the prompting device is located, driving each of the plurality of order carrying trolleys to move to the picking station; and
in response to the item required by the order that is bound not existing in the picking station where the prompting device is located, placing, by each of the plurality of order carrying trolleys, the empty order box that is bound on an order temporary storage shelf, and taking, by each of the plurality of order carrying trolleys, another order box from the order box injection port.

12. A system for warehousing operation, comprising:
a prompting device, configured to receive real-time order information and prompt a worker or a picking device to pick an item according to the order information;
an allocating device, configured to carry an order box to store and/or carry the item picked by the worker or the picking device; and
a receiving device, configured to receive correspondence information between the allocating device and an item on the allocating device, wherein the allocating device is provided with a communication device configured to receive and prompt an allocating strategy obtained according to the correspondence information;
wherein the allocating device comprises any one or a combination of an order allocation wall fixedly disposed, a movable allocation wall and a conveyance line capable of carrying the order box.

13. The system for warehousing operation according to claim 12, further comprising:
a shelf carrying trolley, wherein the shelf carrying trolley comprises a movement mechanism, and a lifting mechanism disposed on the movement mechanism;
wherein the lifting mechanism is configured to lift a bottom of the movable allocation wall to carry the movable allocation wall.

14. The system for warehousing operation according to claim 12, further comprising:
a forklift, configured to take an order box to be carried from the allocating device and carry the order box to be transport.

15. The system for warehousing operation according to claim 12, further comprising:
a conveyance line, configured to convey an order box having been taken from the allocating device and having been picked by a picking station.

16. The system for warehousing operation according to claim 12, wherein the communication device comprises a display screen, any one or a combination of a plurality of lighting devices provided in one-to-one correspondence information with a plurality of order boxes.

17. A method for warehousing operation, comprising:
receiving, by a prompting device, real-time order information, and prompt, by the prompting device, a worker or a picking device to pick an item according to the order information;
receiving, by a receiving device, correspondence information between an order box on an allocating device and the item; and
receiving and saving, by a communication device disposed on the allocating device, an allocating strategy sent by the receiving device and obtained according to the correspondence information;
wherein the allocating device comprises any one or a combination of an order allocation wall fixedly disposed, a movable allocation wall and a conveyance line capable of carrying the order box.

18. The method for warehousing operation according to claim 17, wherein each prompting device preferentially receives order information of orders containing the same item.

19. The method for warehousing operation according to claim 17, wherein before allocating the item picked by the worker or the picking device to corresponding order box on the allocating device, the method further comprises:
binding an order with the order box according to the order information; and
binding the order box with a specified position of a specified allocating device according to the order information.

20. The method for warehousing operation according to claim 19, wherein before binding the order box with the specified position of the specified allocating device according to the order information, the method further comprises:
assigning a shelf carrying trolley or the worker to carry an allocating device containing an empty order box to a workstation according to work scheduling information of the workstation; or
assigning a forklift to take an empty order box from a temporary storage device for storing empty order boxes and an empty order box injection port, and to place the empty order box at an order box placement position of an order box allocating device of the workstation; or
dispatching the conveyance line to convey the order box to the workstation.

21. The method for warehousing operation according to claim 17, further comprising:
in response to a picking work of the order on the order box allocating device being completed at the workstation, dispatching a shelf carrying trolley to carry the movable allocation wall to other workstations or temporary storage areas; or
prompting the worker to carry the movable allocation wall to other workstations and temporary storage areas; or
dispatching a forklift to take an order box to be carried from the allocating device and carrying the order box to be carried through the forklift; or
dispatching the forklift to take the order box to be carried from the allocating device and carrying the order box through the conveyance line.
